# EUROPEAN PATENT SPECIFICATION

(11) **EP 3 218 555 B1**
(45) Date of publication and mention of the grant of the patent: **14.09.2022**
(21) Application number: 15707408.9
(22) Date of filing: 19.01.2015
(51) Int. Cl.: E04C 2/292, E04C 2/296, E04C 2/38, E04B 1/61, E04C 2/24, B29C 33/30, B29C 33/42, B29C 44/58

(54) **BUILDING PANEL ASSEMBLY AND METHOD OF MANUFACTURING**
GEBÄUDEPANEEL ANORDNUNG UND METHODE ZUR HERSTELLUNG
PANNEAU DE CONSTRUCTION ASSEMBLÉ ET MÉTHODE DE PRODUCTION

(30) Priority: 11.11.2014 GB 201420066
(43) Date of publication of application: 20.09.2017
(73) Proprietor: 4wall IP Ltd., Victoria Mahe (SC)
(72) Inventor: MOSS, Christopher James, Upton Merseyside CH49 6NX (GB); ARROWSMITH, William Ronald, Eastham Merseyside CH62 8HF (GB)
(74) Representative: Bartle Read
(86) International application number: PCT/GB2015/050113
(87) International publication number: WO 2015/107369

(56) References cited:
- EP-A1- 1 154 090
- WO-A1-2004/054774
- WO-A1-2004/076764
- WO-A1-2007/148929
- WO-A1-2010/106224
- WO-A1-2011/033289
- WO-A2-2006/086228
- DE-U1- 29 807 049
- ES-A1- 2 152 809
- US-A- 5 524 400
- US-A- 5 566 523

## Description

The present invention relates to a building panel assembly for use in the construction of new homes, commercial buildings and extensions of one or more storeys. The assemblies of the present invention may be factory fabricated and deemed as 'Offsite' construction under a wider acronym of MMC (modern methods of construction).

There are a number of Offsite methods known in the art include timber frame panel assemblies which are factory fabricated to various degrees of completion prior to being delivered to site and SIPS (structurally insulated panelling systems) which comprises a glued or foamed structural insulation core between two sheathing boards separated by the insulation which provides structural racking resistance to the walling panel as well as an internal and external wall face. Whilst there are many examples of each of the above Offsite panelling system types, they have not been specifically designed and developed to provide a building system solution which can be used in extremes of weather, temperature, humidity and wind whilst ensuring the structure is not susceptible to infestation or being eaten (Termites).

The primary design elements for any building are well understood as they have to provide shelter, warmth, coolth, protection and security whilst being comfortable to live in. These design elements are universal and 'local buildings' have a mix of the above attributes depending upon their historical and often 'empirical' design. In the most part, buildings have been built using locally available materials and formed into structures to provide some or all of the desired functional aspects described above.

As the world's governments commit to reducing the impacts of climate change, the adoption of new approaches to deliver more sustainable buildings and structures has to be enforced by adopting strict building performance codes which ensure the buildings are energy efficient and sustainable. The energy efficiency of a building envelope is a mixture of insulation and airtightness which serves both to keep heat in or out (depending upon climate conditions) and prevent draughts into or out of the building which increases the demand for energy usage to compensate.

Known fabricated building panels typically include a mixture of insulation and membranes (internally and externally) to provide moisture control and airtightness - these materials usually rely upon the introduction of sticky tapes and mastic or silicone seals to aid their performance which can fail over time or extremes in weather and be subject to poor installation techniques leading to poor performance. In addition, often these buildings are constructed by poorly trained (or poorly supervised) builders, which means the 'designed performance' is never met during the life of the building even at the outset.

WO2011033289 discloses a known building panel assembly. WO2010106224 discloses a wall element comprising a first and second plate and an insulation material arranged there between and a rabbet arranged on the edge of the wall elements.

Advantageously, the present invention addresses one or more of the problems associated with the prior art

According to the present invention there is provided a building panel assembly comprising a pair of spaced-apart containment boards, separated by an inner insulating core, as defined in claim 1.

The present invention may utilise standard and well known building materials (in the most part) as used in other Offsite system (described above) but only materials which can fulfil their design function within the design brief of being used in diverse weather climates without major redesign are used, therefore materials such as non-treated timber, OSB (orientated strand board) and some externally applied breather membranes have not been used.

The Applicants have taken into account the weaknesses of existing Offsite panelling systems both in the material selection and the necessary skills of the builders to construct a building which performs optimally without the need for applying additional membranes, tapes and mastics in order to provide the moisture and airtightness necessary in a high performance energy efficient building envelope.

The present invention has been designed to satisfy additional performance requirements being placed upon it driven by a need for a 'worldwide' solution with variant 'country' orientated preferences (such as concrete floors, acoustic walls and the ability of the structure to carry additional loadings without the introduction of additional internal structural elements such as columns). The present invention may be capable of carrying additional loading (over and above that provided by standard SIPS panels or timber frame panels without the need for additional structure) and/or be capable of being substantially 'airtight' as a natural part of the panel assembly without the need for tapes, membranes and sealants during or after the erection of the panels.

The present invention may utilise a lightweight structural steel frame around the periphery of each panel which has been shaped such to provide both an airtight seal (via 'Z' joints or air torture routes) and a structurally stiff 'I' joint at each panel to panel connection. This joint may have a spigot of MgO board glued into each spline (2 splines per joint) which serves as an additional airtight connector, joins the panels together and provides a line load (vertical column) at each panel joint which increases the load bearing capacity of the standard panels to cope with carrying increased UDL's or small point loads and may be able to carry precast concrete floors. Where additional support is required within the wall depth, the MgO splines may be replaced with a structural steel column (UC) which fits into the shape between the two adjoining panels and provides additional line loads for individual point loads such as internal beam supports.

In one embodiment, the present invention's use of lightweight structural steel frame combined with a structural insulation and external and internal structural racking boards, combine to form a composite structure which can carry extreme wind / side loads and increased vertical loads whilst providing a robust and thermally efficient airtight structure. However, additionally the present invention avoids the need for additional elements to eliminate 'Thermal Bridging' as its construction is optimized to prevent thermal bridging at the panel joints by uniquely 'floating' the external racking boards on each face of the panel off the steelwork sections whilst maintaining a layer of insulation in front of each section of steelwork such that the steelwork does not compromise the thermal capacity of the panels at the junctions.

In another embodiment, the present invention's use of preformed lightweight steel sections 'both as vertical I joints and male and female' connectors, can help ensure that the panels are in perfect alignment due to the accuracy and 'straightness' of the soleplates unlike both timber frame and standard SIP's panels which are often not in alignment due to the fact that the fixing plates are treated timber which are often warped and not in alignment. The accuracy of the present invention's panel alignment can help ensure that each 'panel to panel' connection can be made whilst ensuring that the external and internal board faces do not 'step in or out' leading to problems with plastering / jointing / rendering or decoration.

The present invention minimizes any thermal bridging by ensuring that the rigid frame is insulated from the containment boards by the inner insulating core.

The frame may define a pair of spaced-apart longitudinal channels, which extend around the periphery of the panel and extend into the space between the spaced-apart pair of containment boards.

The rigid frame preferably comprises one or more tongues complimentarily shaped to the channel and received thereby. Two or more panels may thus be connected to one another and slot into place. More preferably, the rigid frame comprises two tongues.

The rigid frame may comprise additional support through universal columns such as I-section or H-section UC supports. Thus, the structural integrity of the building can be improved.

The rigid frame may have a substantially 'H' shaped cross section.

The panel may comprise at least one conduit disposed adjacent to and between the containment board and the inner insulating core. The location of the conduit, for cabling and the like, reduces thermal bridging and ensures that there is insignificant loss of thermal insulating core material between containment boards.

In one embodiment, there are two conduits one disposed adjacent to each of the containment boards. In this embodiment, which may be used for an interior wall structure in a building, cabling can run either side of the panel and can be easily accessed by, for example, an electrician for positioning an electrical power socket, light switch or any such electrical terminal.

The present invention allows maximum 'Offsite' processes to produce the core system - less reliance on vagaries of labour, weather, site storage and wastage - and can work with existing 'entrenched' non-regulatory building materials or trades, such as bricks, blocks and concrete.

Site conditions vary as does the ability to utilise heavy machinery such as cranes, therefore, the system preferably is supplyable to a site in both 'large and small' format panels to suit the project whilst neither of which could restrict the flow and efficiency of the production process. In one embodiment, short lead times (with reduced costs and higher quality) require a 'pre-processed' level of constructed panels available as 'stock items' which can go directly to site or be factory assembled into required wall elevations.

The assembly of the present invention preferably has improved rigidity, structural integrity and improved load-bearing capacity, and in particular has improved resistance to twisting and moreover, improved thermal insulating properties.

In order to align and interconnect adjacent abutting panels, an alignment track is provided, which fits into the corresponding respective spaced-apart channels of the abutting panels.

When assembling a structure utilising panels according to the present invention, in one embodiment, a horizontal sole plate would first be secured to the foundations of the structure, such sole plate having a pair of parallel upstanding rails which are received into the parallel spaced apart-channels of the frame on the base of the SIP wall panel. For vertical alignment, a vertical sole plate would be provided perpendicularly disposed with repsect to the horizontal sole plate, again having corresponding rails for engagement into the spaced-apart channels on the adjacent vertical edge of the SIP panel, thereby enabling accurate positioning a first panel, having previously accurately located the horizontal and vertical sole plates. A subsequent SIP panel is then positioned on the sole plate and connected to said first panel using alignment tracks, and the process is continued until the length of a wall is reached, which can be terminated with a vertical sole plate. As the horizontal sole plate an dthe vertical soleplates have been constructed such that they are perpendicular to one another, the panels are consequently square to one another and correct alignment is ensured. In order to secure the top edge of the respective panels, a ring beam, of similar construction to the wall panels, can then be positioned extending across the top of a plurality of wall panels, said ring beam also having corresponding spaced-apart channels in the peripheral frame for receiving corresponding alignment tracks and for engaging with corresponding tracks of respective wall panels and corner posts.

An advantage of the provision of a rigid peripheral frame according to the present invention is that such can be utilised with more fragile panel members, including magnesium oxide panels, which provide a fire proofing element if required. The rigid structure of the peripheral frame, and its resistance to bending or twisting, significantly improves the performance and protection of more friable materials. Whilst the panels would generally be made to a standard dimension, smaller, narrower, or reduced height panels can be provided to enable the provisions of openings for doors and windows wherever appropriate within the overall construction of a structure.

Further, a significant benefit is the ability to provide conduits through the panels to enable the supply of services, e.g. electrical wiring through the panels without significantly effecting the integrity of such panels, as set out hereinabove.

The present invention will now be described, by way of example only, with reference to the accompanying drawings and examples in which:
Fig. 1 illustrates the basic construction of a panel according to the present invention;
Fig. 2 illustrates the basic construction for a panel joint according to the present invention;
Figs. 3 and 4 illustrate a junction between panels according to the present invention;
Figs. 5 and 6 illustrate a plurality of panels assembled according to the present invention;
Fig. 7 illustrates a plurality of panels assembled with joists, in accordance with the present invention;
Fig. 8 illustrates a structure in accordance with the present invention;
Fig. 9 illustrates an embodiment in accordance with the present invention;

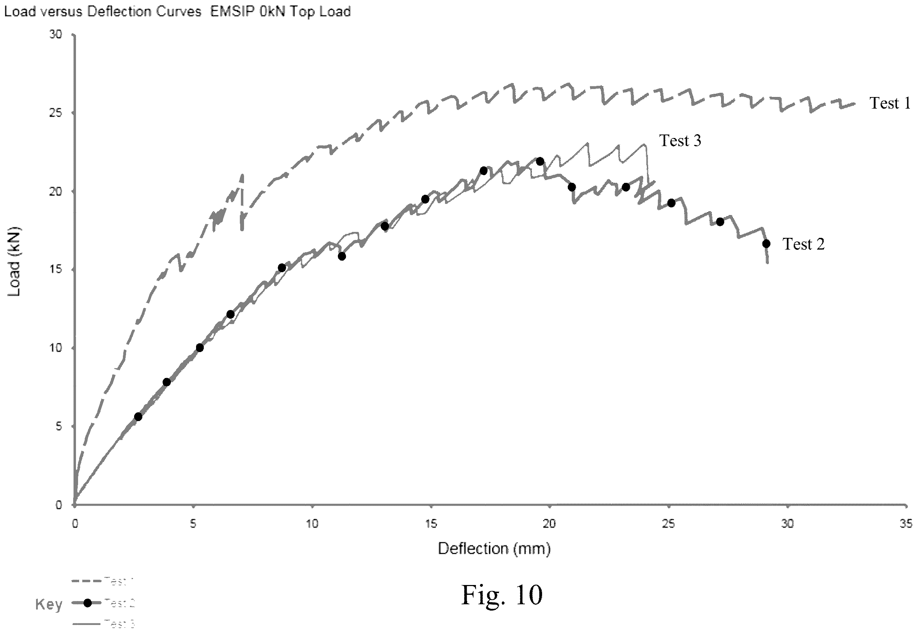

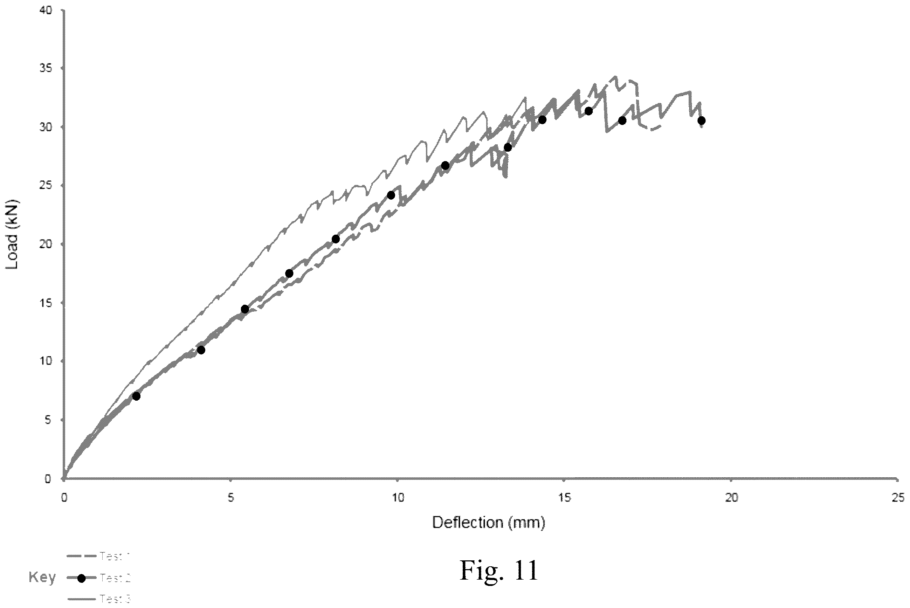

Figs. 10 and 11 are graphs of applied racking load against deflection associated with Example 1 below;
Figs. 12 - 17 are load deflection graphs associated with example 3 below and tables A1 - 6, respectively;

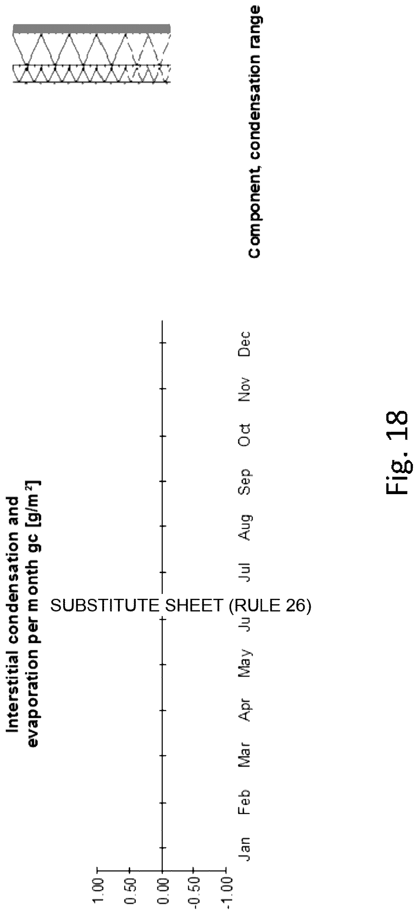

Fig. 18 is a graph and schematic showing the condensation at any interface of a system in accordance with the present invention in any month of the year;
Fig. 19 is a load deflection graph associated with example 7 below;
Fig. 20 is a load/deflection graph for a panel in accordance with the present invention;
Fig. 21 shows the mean surface temperature, together with the temperature/time relationship specified in the standard;
Fig. 22 shows the mean temperatures recorded on the unexposed surface of the panel;
Fig. 23a -e show a jig for use in the manufacture of a panel in accordance with the present invention; and
Fig. 24 shows a device for use in accordance with the present invention.

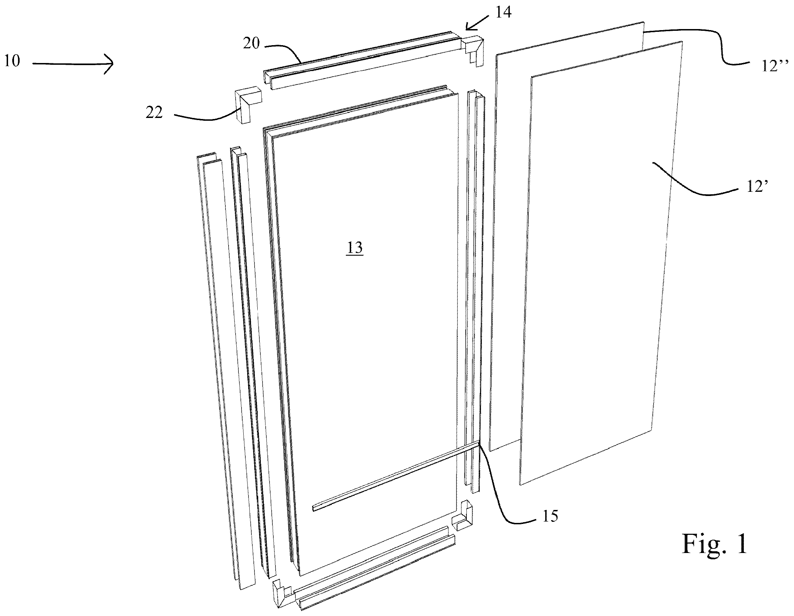

Referring now to the drawings, Fig. 1 is an exploded view of a rectangular structural insulated panel (SIP) 10, which comprises a pair of spaced-apart containment boards 12',12" an inner insulating core 13 and a low profile peripheral external rigid frame 14, preferably of metal, e.g. steel, extending around the entire periphery of the spaced-apart boards 12',12" , the insulating core 13 having spaced-apart slots 16, which also extend around the entire periphery of the panel, the inner insulating core 13 being manufactured from material such as expanded or extruded polystyrene or polyurethane. The inner core is air and moisture tight. The containment boards may be manufactured form any suitable material such as MgO, OSB, Ply, Fermacell and fireboard.

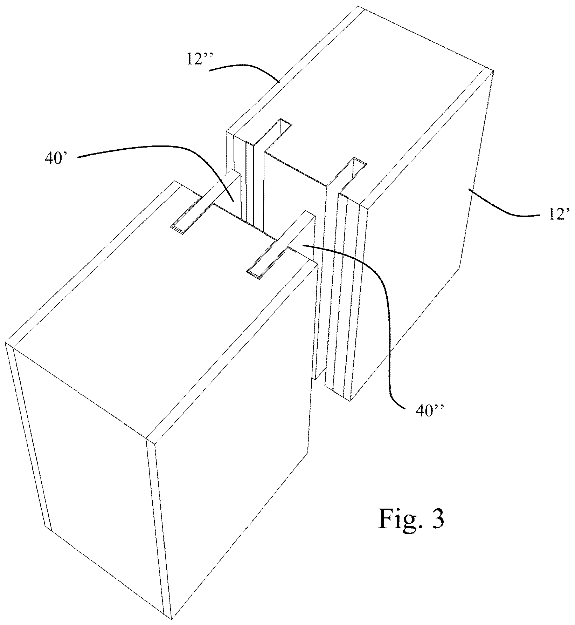

The panel may additionally be modified to include a conduit 15 to enable services such as electrical cabling to be fed to or across a panel 10 without compromising its structural integrity (see Fig. 3). The location of the conduit is adjacent to the boards 12', 12" and between the boards and the inner core so as to permit easy access to the conduit for cabling, for example, and minimize any compromise in insulating properties, preventing thermal bridging.

The profile of the peripheral frame 14 is such that its cross section is substantially 'H-shaped' which assist in ensuring a neat and secure interconnection of the respective panels 10.

The peripheral frame 14 comprises four elongate members 20 which run along the length of each side of the SIP panel and four corner members 22. When assembled they form a rigid peripheral frame around the inner insulating core 13, providing structural support. The corner members help ensure that the panels do not twist and increase torsional rigidity.

The shape of the panel 10 can be any suitable for use in constructing a building or the like, such as square, rectangular, triangular.

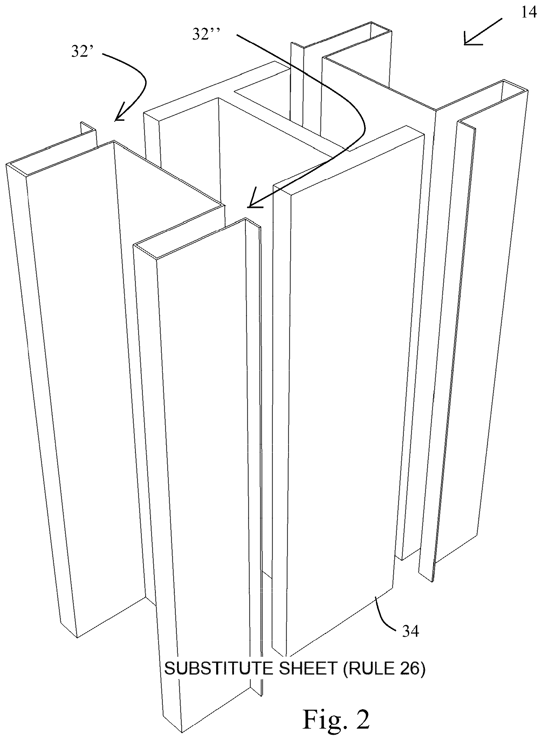

Fig. 2 is an exploded partial view of the structural framework, peripheral frame 14, and the structural splines 30 for connecting adjacent panels 10 together. The perimeter frame has two channels, 32', 32" extending around its perimeter which provide an air torture route when panels are assembled and interlock with one another. The channels receive structural splines, which can have I or 'H' section depending upon the structural load they are intended to bear. Here, an 'H' section spline 34 is shown which is particularly suitable for applications such as floors or roofs. 'I' section splines are particularly useful when connecting adjacent panels for use as walls. The splines 30 and peripheral frame 14 may have a fire foam used to maximize airtightness there between and provide a structural connection between panels.

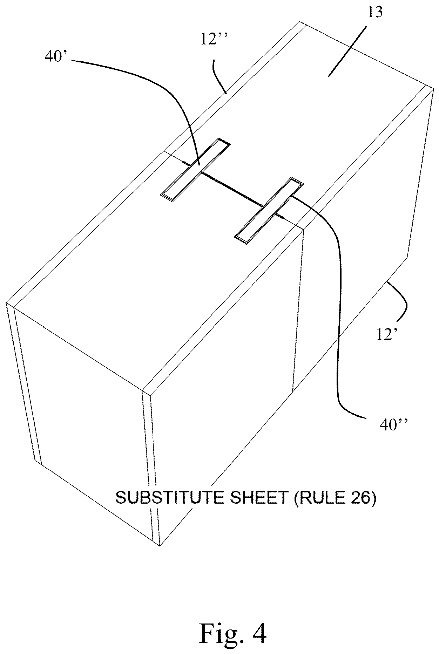

Fig. 3 shows two adjacent panels being connected to one another where 'I' section connectors (or splines) 40', 40" are used. Here the peripheral frame is covered by insulating core material to eliminate thermal bridging. Fig. 4 shows the panels connected to one another.

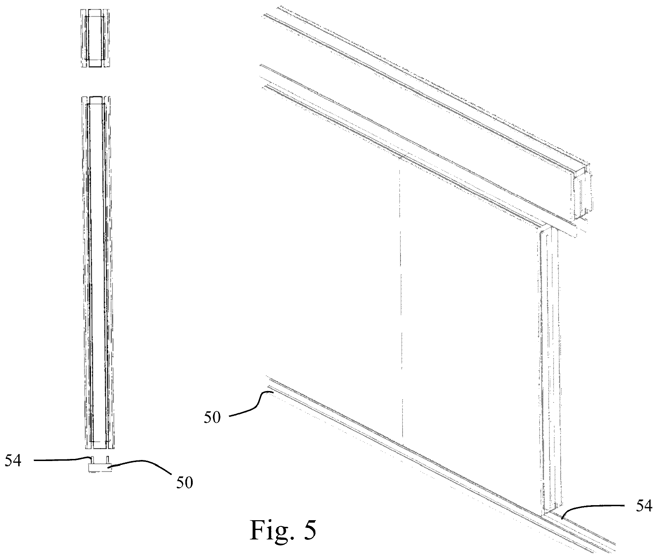

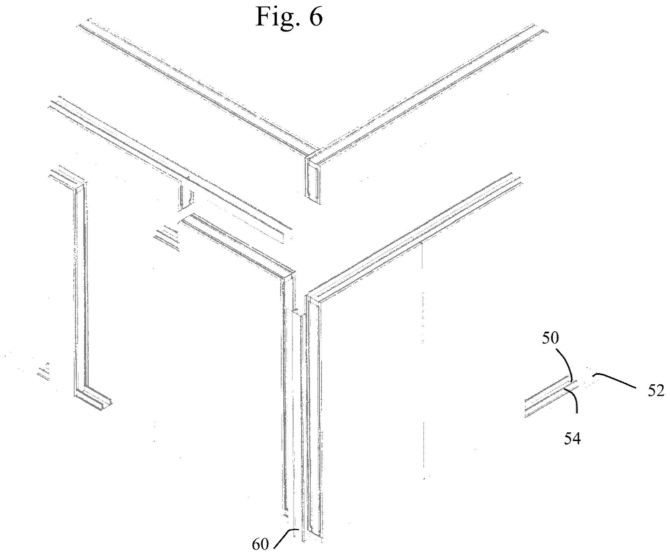

Referring now to Figs. 5 and 6, the method of construction of a structure utilising SIP panels of the present invention is illustrated. Firstly, a ridged horizontal sole plate 50 is secured to the foundation or floor of a building 52, the horizontal sole plate 50 having upstanding rails 54, which are appropriately sized and spaced to be located within the channels 16 of the peripheral rigid frame 14 on the bottom edge of the panel 10. Similarly, a vertical sole plate 60, perpendicular to the horizontal sole plate 50, is positionable at a corner of a structure and may have corresponding channels for receiving alignment rails in a similar manner to that as described above for the ring beam, or may have a profile provided thereon similar to the horizontal sole plate 50 for engaging in the channels 16 of the peripheral frame 14 on the vertical edge of the pane! 10.

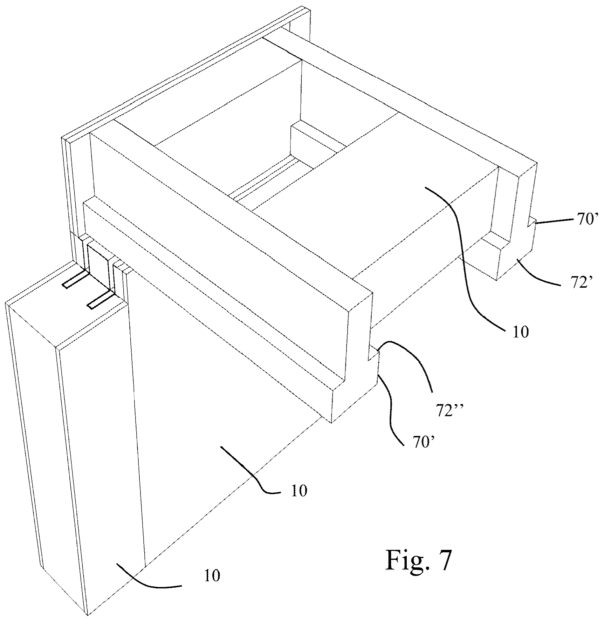

Fig. 7 shows joists 70', 70" supported by the top of a wall comprising a plurality of panels 10. The joists are shaped to receive panels 10 on ledges 72', 72". The panels 10 are structurally robust to provide sufficient strength for use as an elevated floor.

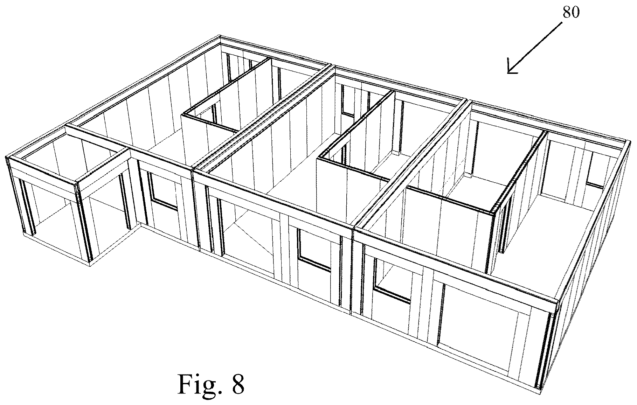

Fig. 8 is a partial view of a structure 80 built from panels in accordance with the present invention. As can be clearly seen, it will also be appreciated that panels 10 can be made in different sizes, with a bridging panel over an opening, to provide access for a window, and similarly, whilst panels are generally of the same standard size, different width panels can be provided to provide flexibility in the size of the structure and also to accommodate openings for doors or the like.

A plurality of panels 10 can be assembled and aligned using the external rigid frame 14, with I-section or H-section universal columns. In order to continue this structure vertically, further panels 10 can be placed on top of one another with joists hung between opposed parallel external rigid frames provide a support base for flooring panels for the upper storey and tie together opposite walls of the structure.

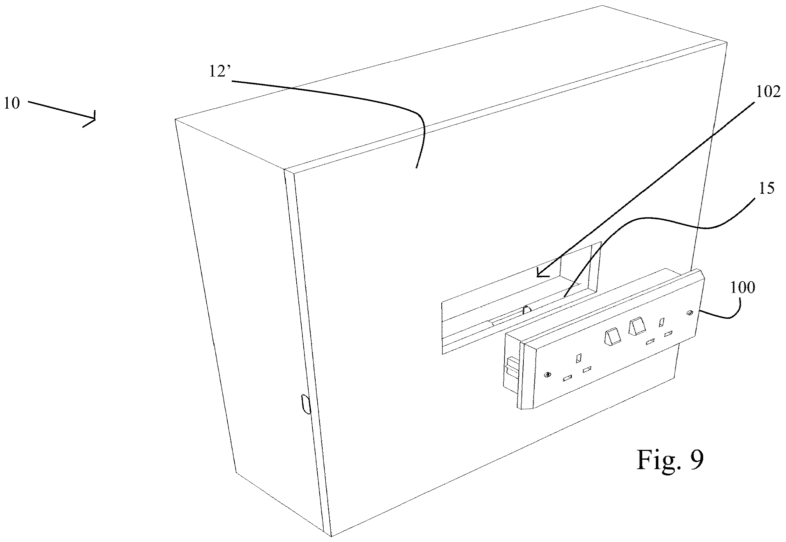

Fig. 9 shows a socket 100 and the complimentary shaped recess 102 which was cut into the panel 10. This has provided space for the socket to sit in place and be received in the panel 10 as well as access to the conduit 15 through which electrical cable can be passed to connect a source of electricity to the socket 100. The conduit disposed within the panel structure adjacent to the containment boards ensures easy access for electricians and the like to the conduit and ensures that there is a deep, continuous section of insulating material between the conduits disposed adjacent to the containment boards to inhibit thermal bridging.

As can be seen from the above, the components of the building system provided primarily by the novel panel of the present invention, incorporating the rigid peripheral frame having spaced-apart slots 16 provides a reliable and robust method of construction, providing a substantially improved method of construction having accurately positionable panels with improved stability and load bearing capacity, improved thermal insulating properties by reducing thermal bridging and fire resistance, due to a provision of the double channel arrangement with locking alignment rails which maintain a tight air gap and thereby prevent the spread of fire and smoke, as well as enabling the internal conditions of a structure to be better and more efficiently controlled. Further, the peripheral frame enables, more readily, the use of magnesium oxide panels to provide further fire resistance.

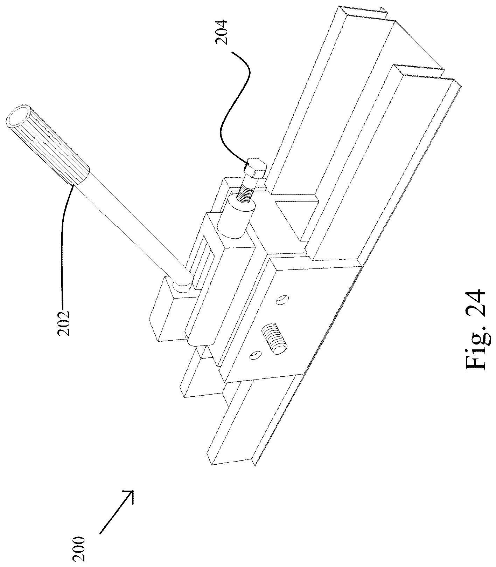

Fig. 24 shows a device 200 for use in installing panels and pushing adjacent panels together. To ensure the panels maintain a tight fit at each panel interface, the 'panel pusher' device 200 is positioned directly behind the incoming panel at the base, the panel pusher is clamped into position on the metal male soleplate and the actuating arm 202 is pushed down which in turn pushes out the piston 204 which in turn applies a horizontal force which moves the panel away from the clamp and thus closes up the gap between the two adjoining panels and ensures a perfectly tight seal. - A securing screw is then located in the heel of the panel to maintain its position relative to the adjoining panel whilst the glue sets.
The present invention will now be described , by way of example only with reference to the following examples.

### Example 1

A series of structurally insulated wall panels referenced as 4wall structurally insulated semi-SIP's were received from EcoMech for testing for racking resistance to BS EN594:2011 Timber Structures - Test Methods. Racking strength and stiffness of the panel was determined according to Section 6.5 of BS EN 594:2011

Each panel was of overall size 2400 × 2400 mm and comprised of a 1mm pressed steel frame and corner boots with a 1mm pressed steel soleplate and head binder. The structural splines consisted of 12mm Multi Pro XS magnesium boards with two per panel joint at 95mm wide. The panels had a BASF PU structural insulated foam core.

2 × 1.2 m × 2.4 m × 9mm thick Multi Pro XS Magnesium sheathing boards were bonded (full surface) to the inner core of structural PU insulation and the panels screwed at nominally 150 mm centres at the soleplate and head binder.

Three of the panels were tested with no applied vertical load and three tested with 5kN vertical load.

Holes 100mm in diameter were cut in the base rail of each of the racking panels, centred at the anchorage points of the base rig. M16 × 250mm long bolts were inserted through the holes with large steel plates attached (50mm wide × 220mm long × 10mm thick), which were rotated through 90 degrees to span across the 2 bottom rail flanges.

The racking panel was bolted to the test rig through a long hardwood timber foundation plate such that the bottom rail was fixed down by five M16 × 250 mm long bolts. The panel was laid flat in the test rig which had been bolted down to the laboratory strong floor. The panel was placed on Teflon coated steel packers to allow it to move freely when loading.

Hydraulic rams were fixed to the test rig at the panel header end such that they would be able to apply a vertical top load to the panel at 600 mm centres. In accordance BS EN 594:2011, linear voltage displacement transducers (LVDT) were fixed in place so as to record horizontal deflection at the head of the panel, at the base of the panel and to measure any uplift at the base of the panel.

Using hydraulic rams linked via a common manifold, a vertical pre-load of 1 kN was applied to the head binder at the 600mm centres and maintained for 120 s. This load was then removed and the panel allowed a recovery period of 300 s before continuing the test.

After the stabilising load cycle, a vertical load (0 kN and 5 kN, respectively) was applied to the head binder at 600 mm centres and maintained throughout the test procedure. The racking load was then applied at a loading rate such that 90% of the maximum load of the panel was achieved within 300 seconds ± 200 seconds.

### Results

The Racking stiffness for each panel tested in accordance with section 6.5.1 of BS EN594: 2011 and the modes of failure is given in Table 1.

Graphs of applied racking load against deflection are given in Figs..

**Table 1 - Summary of Racking Load for Echo Mech Panel screwed and bonded at nominally 80mm centres**

| **Panel No** | **Vertical Top Load per Stud (kN)** | **Racking Strength Fmax (KN)** | **Racking Stiffness (N/mm)** | **Basic Test Racking Resistance R_{b} (KN/m)** | **Mode of Failure** |
|---|---|---|---|---|---|
| 1 | 0 | 26.84 | 3334 | 5.25 | Panel pulled away from base rail at the leading stud along with some failure of base rail |
| 2 | | 22.07 | 1766 | | |
| 3 | | 23.10 | 1674 | | |
| **Mean** | - | **24.00** | **2258** | - | - |
| 1 | 5 | 34.30 | 2192 | 3.23 | Panel pulled away from base rail at the leading stud along with some failure of base rail |
| 2 | | 33.13 | 2217 | | |
| 3 | | 32.54 | 2985 | | |
| **Mean** | **-** | **33.32** | **2465** | - | - |

The test that the panels were subjected to, was an industry designed racking test for timber frame panels, which in themselves had a failure point 'built in' to the test rig. The limitations of this type of test was apparent in the fact that the test did not truly test or reflect the much higher racking resistance that the panels of the present invention have over timber frame panels for which the jig and test method was designed.

However, it is to be appreciated that the results obtained in this test still showed a substantial increase in racking resistance over and above a similar sized timber framed panel. Note: The Basic test racking resistance given in BS5268 part 6.1 for a double sheathed panel Incorporating a category 1 board is 2.52kN/m.

### Example 2

A section of a panel in accordance with the present invention (SIEP system) 2.324m × 2.324m was sealed into a Plywood box, with all joints made airtight was sealed around each wall such that the external face of the panel was open to atmosphere. The total test area was 5.4m².

A fan was connected to the enclosure and the pressure within the enclosure allowed to stabilise at a static pressure of 50Pa. The static pressure was measured using an electronic manometer. The airflow into the sample was then measured and used to calculate the air leakage rate.

**Table 2.**

| Panel | Velocity (m/s) | Flow (l/s) | Air Leakage Rate (m³/h | Air leakage (m³/h/m²) |
|---|---|---|---|---|
| Test 1 panel according to present invention | 0.70 | 1.282 | 4.617 | 0.855 |

As guidance the CIBSE Guide (CIBSE Guide TM23:2000 Testing Buildings for Air Leakage) for an entire dwelling states good practice is a limit of 10m3/h/m2 @ 50Pa and best practice is 5 m3/h/m2 @ 50Pa.

### Example 3

A panel in accordance with the present invention of overall size 1200 × 2400 mm and comprised perimeter framing sections mitred and retained together with corner jointing brackets. The corner brackets were inserted into the perimeter profiles, through fixed, and spot welded.

A 1.2 m × 2.4 m by 9 mm thick magnesium silicate based board was fixed to each face of the single panel using 5.5 mm diameter × 65 mm long HILTI coated self-drilling wing tip screws. The board was fixed to the panel at nominally 300 mm centres to the perimeter framework. The fixings were placed 20 mm from the board edges. A panel core of polyurethane (PU) foam was injected into the cavity created by perimeter profiles and panel facing sheets and adhered to these components by its own adhesive properties whilst curing. Oriented strand board, Grade3 (OSB/3), 45mm wide × 11mm thick, were fitted into the perimeter frame profile, as perimeter infill, along the head and base of each single panel.

The test panel was located onto the laboratory strong floor centrally under the 2000kN servo assisted compressive strength machine (Dartec). In order to achieve eccentric loading the panels were supported on a 20mm thick steel plate such that 40mm of the width of the panel base was supported.

Three linear voltage displacement transducers (LVDTs) were fixed in place at quarter points on the vertical centreline of the panel such that any horizontal movement was recorded.

A load equal to the estimated dead load was applied to the panel and held for 30 minutes then released. Deflection readings were taken on application of the load, on immediate removal and after 15 minutes.

The dead load was applied again and held for 15 minutes then increased to the design load and held for 24 hours. Deflection readings were taken at 60 minute intervals. The load was then released and recovery deflection readings were taken immediately and after 15 minutes.

The panel was then loaded to failure with deflection readings taken at 20kN increments.

### Results

A summary of the failure loads and failure modes of each panel tested under axial load is given in Table 3.

A summary of the failure loads and failure modes of each panel tested under eccentric load is given in Table 4.

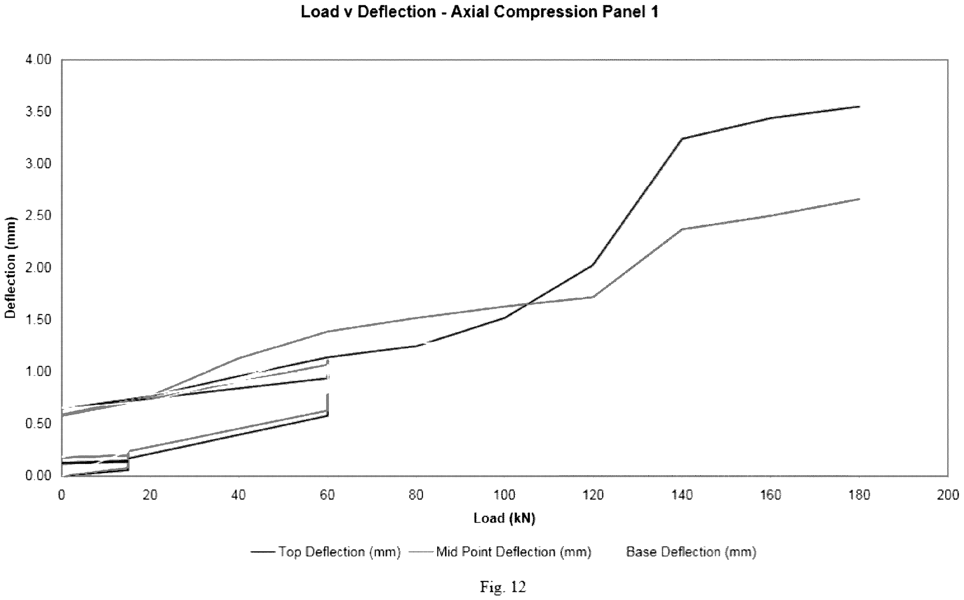

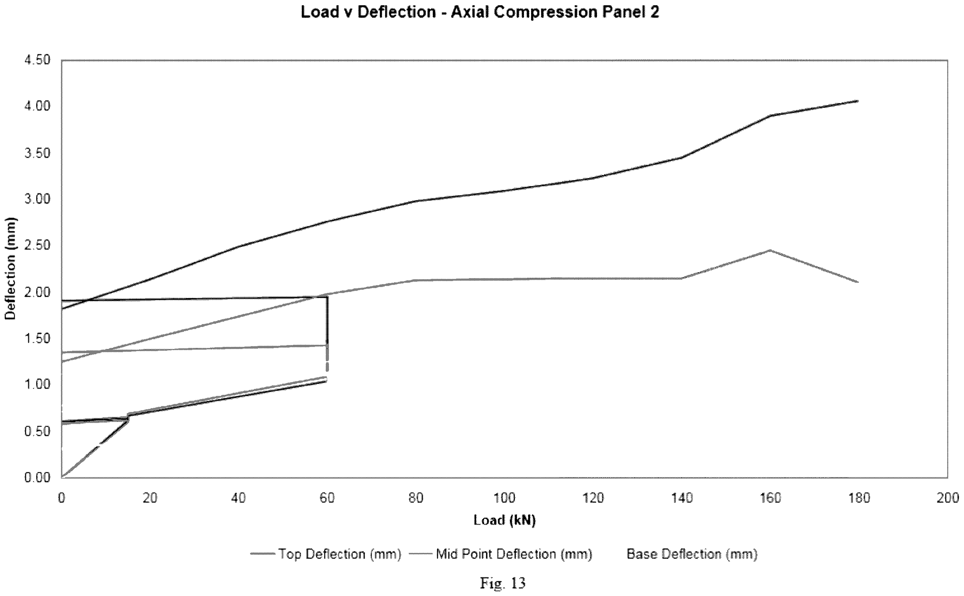

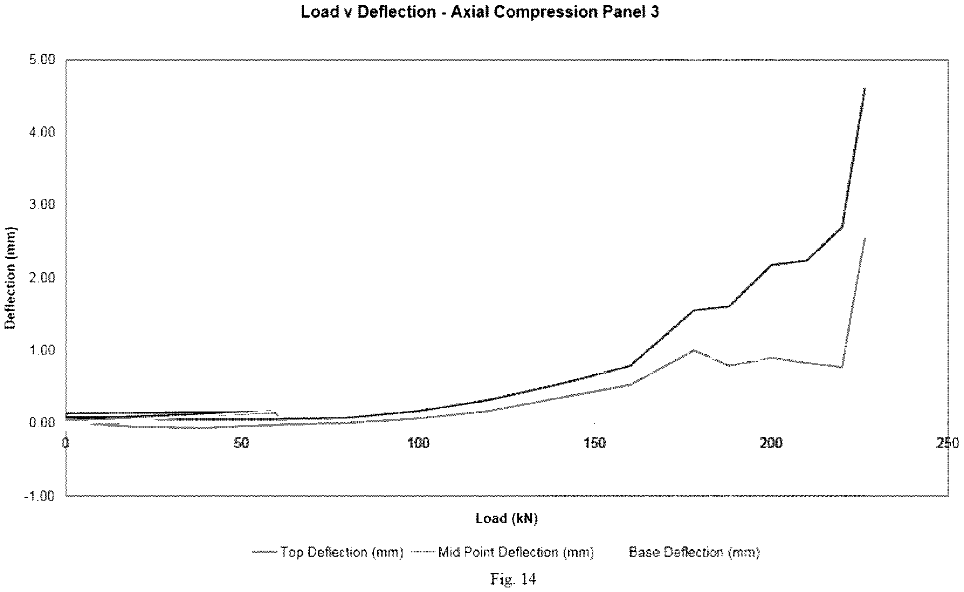

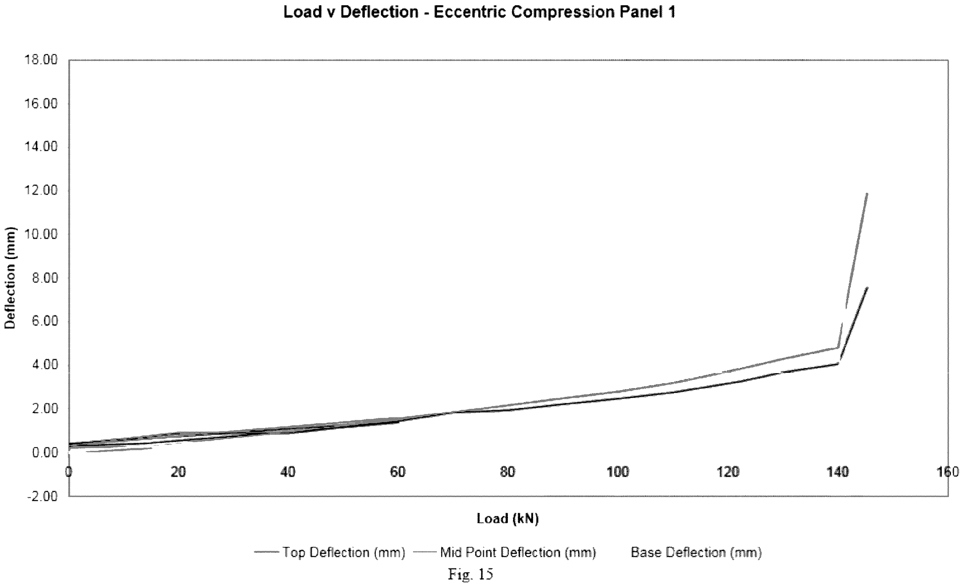

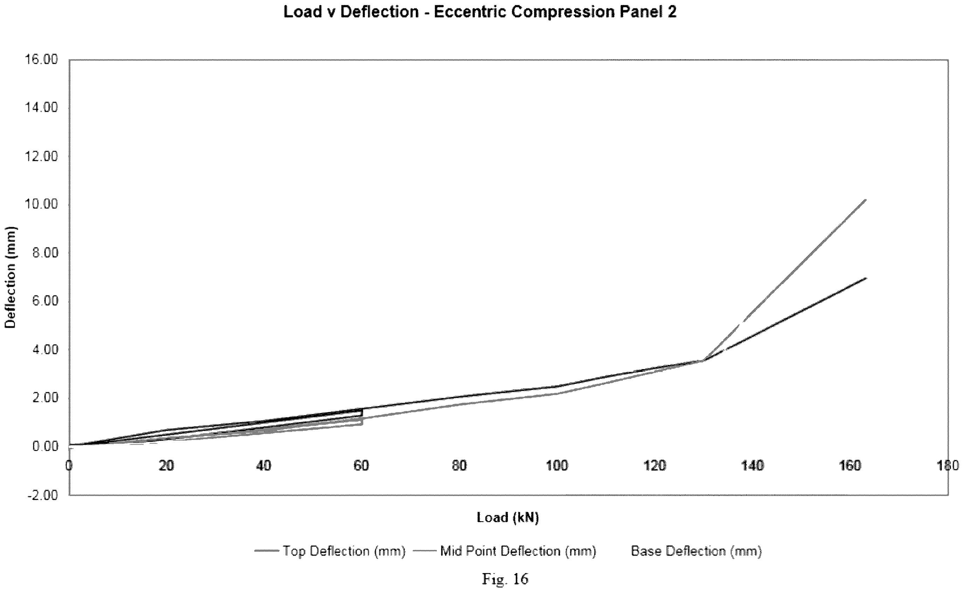

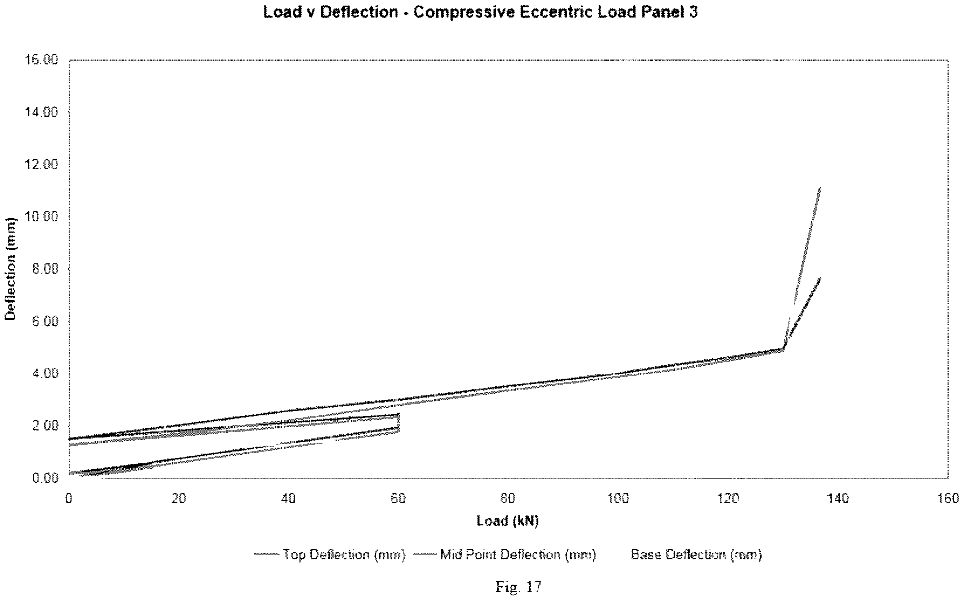

Load deflection graphs are given in Figs. 12 - 17.

Load deflection data is given in Appendix A, Tables A1-A6.

All panels tested axially failed similarly by initial failure and debonding of the sheathing and compression of the OSB at the base at a similar load of around 200kN.

All panels tested eccentrically failed similarly by initial failure and debonding of the sheathing and OSB followed by compression of the sheathing and OSB at the base at a similar load of around 150kN.

**Table 3**

| Summary of Performance under Axial Compressive Load | | | | | |
|---|---|---|---|---|---|
| | **Dead Load (kN/m)** | **Design Load (kN/m)** | **Failure Load (kN)** | **Failure Load (kN/m)** | **Mode of Failure** |
| 1 | 15 | 60 | 186.2 | 155.2 | Delamination of sheathing from base of frame and crushing of internal OSB to base stud |
| | | | | | |
| | | | | | |
| | | | | | |

**Table 4**

| Summary of Performance under Eccentric Compressive Load | | | | | |
|---|---|---|---|---|---|
| **Panel Number** | **Dead Load (kN/m)** | **Design Load (kN/m)** | **Failure Load (kN)** | **Failure Load (kN/m)** | **Mode of Failure** |
| 1 | 15 | 60 | 145.3 | 121.1 | Delamination of sheathing and OSB from frame, compressive failure of sheathing and OSB. Compression failure of perimeter steel stud |
| 2 | 15 | 60 | 163.2 | 136.0 | |
| 3 | 15 | 60 | 136.7 | 113.9 | |
| **Mean** | - | - | ***148.4*** | ***123.7*** | - |

**Table A1**

| Load / Deflection Data for Axial Compressive Strength on SIEP - Pannel 1 | | | | |
|---|---|---|---|---|
| **Load (kN)** | **Comment** | **Top Deflection (mm)** | **Mid Point Deflection (mm)** | **Base Deflection (mm)** |
| **0** | | 0.00 | 0.00 | 0.00 |
| **15** | Dead ioad | 0.06 | 0.08 | 0.24 |
| **15** | Hold 30 min | 0.15 | 0.20 | 0.36 |
| **0** | Release | 0.13 | 0.18 | 0.19 |
| **0** | Hold 15 min | 0.12 | 0.18 | 0.18 |
| **15** | Dead load | 0.14 | 0.20 | 0.35 |
| **15** | Hold 15 min | 0.17 | 0.24 | 0.39 |
| **60** | Design load | 0.56 | 0.63 | 0.80 |
| **60** | Leave 15 min | 0.69 | 0.73 | 0.84 |
| **60** | 1 hour | 0.77 | 0.81 | 0.90 |
| **60** | 2 hour | 0.82 | 0.90 | 0.94 |
| **60** | 3 hour | 0.87 | 0.96 | 0.97 |
| **60** | 4 hour | 0.91 | 1.03 | 1.02 |
| **60** | 5 hour | 0.93 | 1.07 | 1.04 |
| **60** | 6 hour | 0.93 | 1.08 | 1.05 |
| **60** | 7 hour | 0.98 | 1.10 | 1.07 |
| **60** | 8 hour | 0.95 | 1.09 | 1.06 |
| **60** | 9 hour | 0.95 | 1.10 | 1.07 |
| **60** | 10 hour | 0.96 | 1.11 | 1.07 |
| **60** | 11 hour | 0.95 | 1.10 | 1.06 |
| **60** | 12 hour | 0.95 | 1.10 | 1.06 |
| **60** | 13 hour | 0.95 | 1.11 | 1.06 |
| **60** | 14 hour | 0.95 | 1.10 | 1.06 |
| **60** | 15 hour | 0.95 | 1.09 | 1.05 |
| **60** | 16 hour | 0.95 | 1.09 | 1.04 |
| **60** | 17 hour | 0.95 | 1.09 | 1.04 |
| **60** | 18 hour | 0.95 | 1.08 | 1.04 |
| **60** | 19 hour | 0.94 | 1.08 | 1.03 |
| **60** | 20 hour | 0.94 | 1.08 | 1.03 |
| **60** | 21 hour | 0.94 | 1.07 | 1.03 |
| **60** | 22 hour | 0.95 | 1.07 | 1.03 |
| **60** | 23 hour | 0.94 | 1.08 | 1.03 |
| **60** | 24 hour | 0.94 | 1.07 | 1.03 |
| **0** | Release | 0.65 | 0.58 | 0.66 |
| **0** | Hold 15 min | 0.61 | 0.56 | 0.64 |
| **0** | Increase to failure | 0.65 | 0.59 | 0.65 |
| **20** | | 0.77 | 0.77 | 0.72 |
| **40** | | 0.96 | 1.13 | 0.94 |
| **60** | | 1.14 | 1.39 | 1.21 |
| **80** | | 1.25 | 1.52 | 1.28 |
| **100** | | 1.52 | 1.63 | 1.29 |
| **120** | | 2.03 | 1.72 | 1.33 |
| **140** | | 3.24 | 2.37 | 1.59 |
| **160** | | 3.44 | 2.50 | 1.77 |
| **180** | | 3.55 | 2.66 | 1.99 |

**Table A2**

| Load / Deflection Data for Axial Compressive Strength on SIEP - Panel 2 | | | | |
|---|---|---|---|---|
| **Load (kN)** | **Comment** | **Top Deflection (mm)** | **Mid Point Deflection (mm)** | **Base Deflection (mm)** |
| **0** | | 0.00 | 0.00 | 0.00 |
| **15** | Dead load | 0.62 | 0.60 | 0.36 |
| **15** | Hold 30 min | 0.65 | 0.62 | 0.38 |
| **0** | Release | 0.61 | 0.59 | 0.32 |
| **0** | Hold 15 min | 0.59 | 0.58 | 0.31 |
| **15** | Dead load | 0.64 | 0.65 | 0.39 |
| **15** | Hold 15 min | 0.67 | 0.69 | 0.42 |
| **60** | Design load | 1.04 | 1.09 | 0.84 |
| **60** | Leave 15 min | 1.12 | 1.18 | 0.92 |
| **60** | 1 hour | 1.21 | 1.25 | 0.97 |
| **60** | 2 hour | 1.24 | 1.29 | 1.01 |
| **60** | 3 hour | 1.28 | 1.33 | 1.04 |
| **60** | 4 hour | 1.32 | 1.36 | 1.06 |
| **60** | 5 hour | 1.37 | 1.39 | 1.09 |
| **60** | 6 hour | 1.40 | 1.42 | 1.11 |
| **60** | 7 hour | 1.40 | 1.42 | 1.11 |
| **60** | 8 hour | 1.41 | 1.43 | 1.11 |
| **60** | 9 hour | 1.40 | 1.42 | 1.12 |
| **60** | 10 hour | 1.41 | 1.44 | 1.11 |
| **60** | 11 hour | 1.42 | 1.42 | 1.11 |
| **60** | 12 hour | 1.45 | 1.42 | 1.12 |
| **60** | 13 hour | 1.48 | 1.41 | 1.14 |
| **60** | 14 hour | 1.47 | 1.42 | 1.13 |
| **60** | 15 hour | 1.49 | 1.42 | 1.11 |
| **60** | 16 hour | 1.52 | 1.43 | 1.11 |
| **60** | 17 hour | 1.57 | 1.42 | 1.11 |
| **60** | 18 hour | 1.62 | 1.42 | 1.12 |
| **60** | 19 hour | 1.66 | 1.43 | 1.11 |
| **60** | 20 hour | 1.69 | 1.42 | 1.10 |
| **60** | 21 hour | 1.74 | 1.41 | 1.11 |
| **60** | 22 hour | 1.79 | 1.42 | 1.11 |
| **60** | 23 hour | 1.85 | 1.42 | 1.11 |
| **60** | 24 hour | 1.95 | 1.43 | 1.11 |
| **0** | Release | 1.91 | 1.35 | 0.78 |
| **0** | Hold 15 min | 1.82 | 1.25 | 0.71 |
| **20** | Increase to failure | 2.14 | 1.50 | 0.94 |
| **40** | | 2.49 | 1.74 | 1.13 |
| **60** | | 2.76 | 1.98 | 1.25 |
| **80** | | 2.98 | 2.13 | 1.34 |
| **100** | | 3.09 | 2.14 | 1.35 |
| **120** | | 3.23 | 2.15 | 1.35 |
| **140** | | 3.45 | 2.15 | 1.32 |
| **160** | | 3.90 | 2.45 | 1.47 |
| **179.7** | Failure | 4.06 | 2.11 | 0.48 |

**Table A3**

| Load / Deflection Data for Axial Compressive Strength on SIEP - Panel 3 | | | | |
|---|---|---|---|---|
| **Load (kN)** | **Comment** | **Top Deflection (mm)** | **Mid Point Deflection (mm)** | **Base Deflection (mm)** |
| **0** | | 0.00 | 0.00 | 0.00 |
| **15** | Dead load | 0.01 | 0.00 | 0.01 |
| **15** | Hold 30 min | 0.01 | 0.00 | 0.01 |
| **0** | Release | 0.09 | 0.05 | 0.02 |
| **0** | Hold 15 min | 0.09 | 0.06 | 0.03 |
| **15** | Dead load | 0.09 | 0.05 | 0.03 |
| **15** | Hold 15 min | 0.09 | 0.04 | 0.03 |
| **60** | Design load | 0.17 | 0.16 | 0.17 |
| **60** | Leave 15 min | 0.15 | 0.16 | 0.17 |
| **60** | 1 hour | 0.16 | 0.17 | 0.19 |
| **60** | 2 hour | 0.16 | 0.17 | 0.19 |
| **60** | 3 hour | 0.16 | 0.17 | 0.19 |
| **60** | 4 hour | 0.16 | 0.16 | 0.19 |
| **60** | 5 hour | 0.16 | 0.15 | 0.18 |
| **60** | 6 hour | 0.16 | 0.15 | 0.18 |
| **60** | 7 hour | 0.14 | 0.15 | 0.17 |
| **60** | 8 hour | 0.13 | 0.12 | 0.14 |
| **60** | 9 hour | 0.13 | 0.11 | 0.14 |
| **60** | 10 hour | 0.14 | 0.12 | 0.15 |
| **60** | 11 hour | 0.14 | 0.13 | 0.15 |
| **60** | 12 hour | 0.15 | 0.13 | 0.16 |
| **60** | 13 hour | 0.15 | 0.14 | 0.16 |
| **60** | 14 hour | 0.15 | 0.14 | 0.17 |
| **60** | 15 hour | 0.16 | 0.14 | 0.17 |
| **60** | 16 hour | 0.16 | 0.14 | 0.17 |
| **60** | 17 hour | 0.16 | 0.15 | 0.16 |
| **60** | 18 hour | 0.16 | 0.15 | 0.17 |
| **60** | 19 hour | 0.16 | 0.15 | 0.17 |
| **60** | 20 hour | 0.16 | 0.15 | 0.17 |
| **60** | 21 hour | 0.16 | 0.15 | 0.17 |
| **60** | 22 hour | 0.16 | 0.15 | 0.17 |
| **60** | 23 hour | 0.16 | 0.15 | 0.17 |
| **60** | 24 hour | 0.16 | 0.15 | 0.17 |
| **0** | Release | 0.14 | 0.04 | 0.01 |
| **0** | Hold 15 min | 0.08 | 0.02 | -0.08 |
| **20** | Increase to failure | 0.06 | -0.05 | -0.13 |
| **40** | | 0.06 | -0.06 | -0.18 |
| **60** | | 0.06 | -0.02 | -0.08 |
| **80** | | 0.08 | 0.01 | -0.05 |
| **100** | | 0.17 | 0.07 | 0.02 |
| **120** | | 0.32 | 0.17 | 0.06 |
| **140** | | 0.54 | 0.35 | 0.14 |
| **160** | | 0.79 | 0.53 | 0.23 |
| **178** | | 1.56 | 1.00 | 0.91 |
| **188** | | 1.61 | 0.79 | 0.88 |
| **200** | | 2.18 | 0.90 | 0.86 |
| **210** | | 2.24 | 0.83 | 0.74 |
| **220** | | 2.70 | 0.77 | 0.64 |
| **226.5** | Failure | 4.61 | 2.55 | 2.44 |

**Table A4**

| Load / Deflection Data for Eccentric Compressive Strength on SIEP - Panel 1 | | | | |
|---|---|---|---|---|
| **Load (kN)** | **Comment** | **Top Deflection (mm)** | **Mid Point Deflection (mm)** | **Base Deflection (mm)** |
| **0** | | 0.00 | 0.00 | 0.00 |
| **15** | Dead load | 0.31 | 0.21 | -0.01 |
| **15** | Hold 30 min | 0.31 | 0.22 | -0.01 |
| **0** | Release | 0.00 | 0.04 | -0.03 |
| **0** | Hold 15 min | 0.31 | 0.23 | -0.02 |
| **15** | Dead load | 0.43 | 0.31 | -0.01 |
| **15** | Hold 15 min | 0.45 | 0.32 | 0.00 |
| **60** | Design load | 1.38 | 1.48 | 0.83 |
| **60** | Leave 15 min | 1.39 | 1.50 | 0.85 |
| **60** | 1 hour | 1.43 | 1.55 | 0.91 |
| **60** | 2 hour | 1.43 | 1.56 | 0.94 |
| **60** | 3 hour | 1.43 | 1.58 | 0.96 |
| **60** | 4 hour | 1.43 | 1.59 | 0.97 |
| **60** | 5 hour | 1.43 | 1.59 | 0.99 |
| **60** | 6 hour | 1.43 | 1.60 | 0.99 |
| **60** | 7 hour | 1.43 | 1.60 | 0.98 |
| **60** | 8 hour | 1.43 | 1.60 | 0.99 |
| **60** | 9 hour | 1.43 | 1.60 | 0.98 |
| **60** | 10 hour | 1.43 | 1.60 | 0.98 |
| **60** | 11 hour | 1.43 | 1.60 | 0.98 |
| **60** | 12 hour | 1.43 | 1.60 | 0.99 |
| **60** | 13 hour | 1.43 | 1.59 | 0.98 |
| **60** | 14 hour | 1.43 | 1.60 | 0.98 |
| **60** | 15 hour | 1.43 | 1.60 | 0.98 |
| **60** | 16 hour | 1.43 | 1.60 | 0.99 |
| **60** | 17 hour | 1.43 | 1.60 | 0.98 |
| **60** | 18 hour | 1.42 | 1.60 | 0.98 |
| **60** | 19 hour | 1.43 | 1.59 | 0.99 |
| **60** | 20 hour | 1.43 | 1.60 | 0.98 |
| **60** | 21 hour | 1.43 | 1.60 | 0.98 |
| **60** | 22 hour | 1.43 | 1.60 | 0.98 |
| **60** | 23 hour | 1.43 | 1.60 | 0.98 |
| **60** | 24 hour | 1.43 | 1.60 | 0.99 |
| **0** | Release | 0.41 | 0.34 | 0.05 |
| **0** | Hold 15 min | 0.38 | 0.33 | 0.03 |
| **20** | Increase to failure | 0.88 | 0.92 | 0.47 |
| **40** | | 0.89 | 0.94 | 0.49 |
| **60** | | 1.45 | 1.57 | 0.98 |
| **70** | | 1.84 | 1.85 | 1.24 |
| **80** | | 1.94 | 2.17 | 1.43 |
| **90** | | 2.22 | 2.49 | 1.67 |
| **100** | | 2.47 | 2.79 | 1.88 |
| **110** | | 2.76 | 3.19 | 2.23 |
| **122** | | 3.25 | 3.82 | 2.79 |
| **130** | | 3.68 | 4.29 | 3.17 |
| **140** | | 4.05 | 4.81 | 3.63 |
| **145.3** | Failure | 7.56 | 11.87 | 16.50 |

**Table A5**

| Load / Deflection Data for Eccentric Compressive Strength on SIEP - Panel 2 | | | | |
|---|---|---|---|---|
| **Load (kN)** | **Comment** | **Top Deflection (mm)** | **Mid Point Deflection (mm)** | **Base Deflection (mm)** |
| **0** | | 0.00 | 0.00 | 0.00 |
| **15** | Dead load | 0.18 | 0.09 | 0.00 |
| **15** | Hold 30 min | 0.19 | 0.10 | 0.00 |
| **0** | Release | 0.09 | 0.07 | 0.00 |
| **0** | Hold 15 min | 0.07 | 0.06 | 0.00 |
| **15** | Dead load | 0.17 | 0.09 | 0.01 |
| **15** | Hold 15 min | 0.19 | 0.12 | 0.02 |
| **60** | Design load | 1.29 | 0.93 | 0.40 |
| **60** | Leave 15 min | 1.40 | 1.01 | 0.44 |
| **60** | 1 hour | 1.44 | 1.04 | 0.48 |
| **60** | 2 hour | 1.47 | 1.07 | 0.50 |
| **60** | 3 hour | 1.48 | 1.09 | 0.53 |
| **60** | 4 hour | 1.49 | 1.10 | 0.54 |
| **60** | 5 hour | 1.50 | 1.11 | 0.55 |
| **60** | 6 hour | 1.51 | 1.12 | 0.56 |
| **60** | 7 hour | 1.51 | 1.13 | 0.57 |
| **60** | 8 hour | 1.51 | 1.13 | 0.58 |
| **60** | 9 hour | 1.51 | 1.13 | 0.57 |
| **60** | 10 hour | 1.50 | 1.12 | 0.57 |
| **60** | 11 hour | 1.50 | 1.12 | 0.56 |
| **60** | 12 hour | 1.50 | 1.12 | 0.57 |
| **60** | 13 hour | 1.50 | 1.11 | 0.56 |
| **60** | 14 hour | 1.49 | 1.12 | 0.57 |
| **60** | 15 hour | 1.49 | 1.13 | 0.57 |
| **60** | 16 hour | 1.50 | 1.12 | 0.57 |
| **60** | 17 hour | 1.49 | 1.13 | 0.58 |
| **60** | 18 hour | 1.49 | 1.13 | 0.59 |
| **60** | 19 hour | 1.51 | 1.14 | 0.59 |
| **60** | 20 hour | 1.51 | 1.13 | 0.57 |
| **60** | 21 hour | 1.50 | 1.13 | 0.58 |
| **60** | 22 hour | 1.50 | 1.13 | 0.58 |
| **60** | 23 hour | 1.51 | 1.13 | 0.57 |
| **60** | 24 hour | 1.50 | 1.12 | 0.58 |
| **0** | Release | 0.01 | -0.04 | 0.02 |
| **0** | Hold 15 min | 0.01 | -0.04 | 0.02 |
| **20** | Increase to failure | 0.70 | 0.36 | 0.09 |
| **40** | | 1.07 | 0.67 | 0.27 |
| **60** | | 1.57 | 1.17 | 0.60 |
| **80** | | 2.07 | 1.75 | 1.00 |
| **100** | | 2.49 | 2.19 | 1.34 |
| **110** | | 2.89 | 2.63 | 1.69 |
| **120** | | 3.25 | 3.10 | 2.12 |
| **130** | | 3.56 | 3.57 | 2.56 |
| **163.2** | Failure | 6.97 | 10.22 | 13.60 |

**Table A6**

| Load / Deflection Data for Eccentric Compressive Strength on SIEP - Panel 3 | | | | |
|---|---|---|---|---|
| **Load (kN)** | **Comment** | **Top Deflection (mm)** | **Mid Point Deflection (mm)** | **Base Deflection (mm)** |
| **0** | | 0.00 | 0.00 | 0.00 |
| **15** | Dead load | 0.58 | 0.42 | 0.13 |
| **15** | Hold 30 min | 0.60 | 0.43 | 0.14 |
| **0** | Release | 0.21 | 0.20 | 0.05 |
| **0** | Hold 15 min | 0.20 | 0.20 | 0.05 |
| **15** | Dead load | 0.60 | 0.45 | 0.14 |
| **15** | Hold 15 min | 0.62 | 0.47 | 0.15 |
| **60** | Design load | 1.95 | 1.79 | 1.06 |
| **60** | Leave 15 min | 2.06 | 1.89 | 1.10 |
| **60** | 1 hour | 2.11 | 1.97 | 1.17 |
| **60** | 2 hour | 2.10 | 1.96 | 1.15 |
| **60** | 3 hour | 2.34 | 2.22 | 1.46 |
| **60** | 4 hour | 2.40 | 2.29 | 1.52 |
| **60** | 5 hour | 2.42 | 2.32 | 1.55 |
| **60** | 6 hour | 2.44 | 2.35 | 1.59 |
| **60** | 7 hour | 2.45 | 2.36 | 1.59 |
| **60** | 8 hour | 2.46 | 2.36 | 1.59 |
| **60** | 9 hour | 2.45 | 2.36 | 1.58 |
| **60** | 10 hour | 2.45 | 2.36 | 1.58 |
| **60** | 11 hour | 2.46 | 2.37 | 1.60 |
| **60** | 12 hour | 2.46 | 2.37 | 1.59 |
| **60** | 13 hour | 2.47 | 2.39 | 1.61 |
| **60** | 14 hour | 2.46 | 2.37 | 1.60 |
| **60** | 15 hour | 2.46 | 2.38 | 1.60 |
| **60** | 16 hour | 2.46 | 2.37 | 1.59 |
| **60** | 17 hour | 2.45 | 2.37 | 1.59 |
| **60** | 18 hour | 2.44 | 2.35 | 1.58 |
| **60** | 19 hour | 2.43 | 2.35 | 1.57 |
| **60** | 20 hour | 2.44 | 2.36 | 1.60 |
| **60** | 21 hour | 2.49 | 2.41 | 1.65 |
| **60** | 22 hour | 2.42 | 2.33 | 1.57 |
| **60** | 23 hour | 2.44 | 2.35 | 1.58 |
| **60** | 24 hour | 2.45 | 2.35 | 1.59 |
| **0** | Release | 1.52 | 1.29 | 0.78 |
| **0** | Hold 15 min | 1.51 | 1.28 | 0.78 |
| **20** | Increase to failure | 2.04 | 1.71 | 1.22 |
| **40** | | 2.59 | 2.22 | 1.63 |
| **60** | | 3.01 | 2.81 | 2.10 |
| **80** | | 3.53 | 3.37 | 2.39 |
| **100** | | 4.01 | 3.89 | 2.81 |
| **110** | | 4.33 | 4.15 | 3.12 |
| **120** | | 4.62 | 4.51 | 3.49 |
| **130** | | 4.96 | 4.88 | 3.82 |
| **136.7** | Failure | 7.65 | 11.11 | 14.39 |

### Example 4

Double panels in accordance with the present invention were constructed consisting of two single SIEP wall panels. The single panel was of overall size 1200x2400 mm and comprised perimeter framing sections mitred and retained together with corner jointing brackets. The corner brackets were inserted into the perimeter profiles, through fixed, and spot welded.

A 1.2 m×2.4 m by 9 mm thick magnesium silicate based board was fixed to each face of the single panel using 5.5 mm diameter x65 mm long HILTI coated self-drilling wing tip screws. The board was fixed to the panel at nominally 300 mm centres to the perimeter framework. The fixings were placed 20 mm from the board edges. A panel core of polyurethane (PU) foam was injected into the cavity created by perimeter profiles and panel facing sheets and adhered to these components by its own adhesive properties whilst curing. Oriented strand board, Grade3 (OSB/3), 45mm wide × 11mm thick, were fitted into the perimeter frame profile, as perimeter infill, along the head and base of each single panel.

Each double panel assembly was connected together by means of an OSB/3 strip with nominal dimensions of 92mm wide × 11mm thick × 2400mm long, such that the strip was fitted into the perimeter frame profile, as a jointing spline, along the vertical edges of the adjoining panels. The splines were bedded on joint sealant.

The panel was fixed into the test chamber such that the face of the panel would be subjected to the heat-rain and freeze thaw accelerated weathering test regime as follows:

### Heat Rain - 80 cycles

Heating to 70^{°}C rising over 1 hour and maintaining at 70^{°}C ±5 at 10-15% RH for a further 2 hours.

Followed by spraying with water (water temp ±15°C) at 1l/m2/min for 1 hour. Draining for 2 hours.

On completion of the heat rain cycles the wall was conditioned for 48 hours at a temperature between 10 and 25°C with a minimum RH of 50%.

### Heat Cold - 5 cycles

Exposure to 50^{°}C±5 with a rise of 1 hour and maximum 10%RH for 7 hours. Exposure to -20°C±5 with a fall over 2 hours and hold for 14 hours.

The test panel was inspected every 4 heat rain cycles and daily under the heat cold cycles to observe changes in the visual characteristics of the panel.

On completion of the cyclic testing the wall was left to dry for 7 days.

### Results

The wall was thoroughly examined for defects. No visible damage was noted to the face of the panel during the test regime or on completion of the test regime

### Example 5

Thermal Transmittence (U-value) of panels in accordance with the present invention according to BS EN ISO 6946.

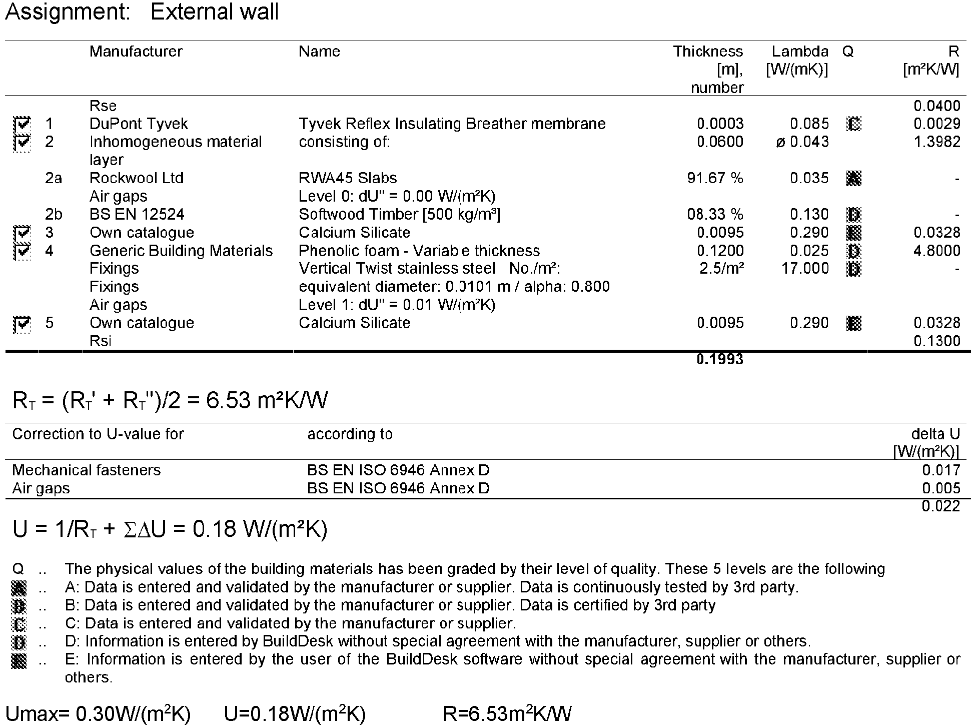

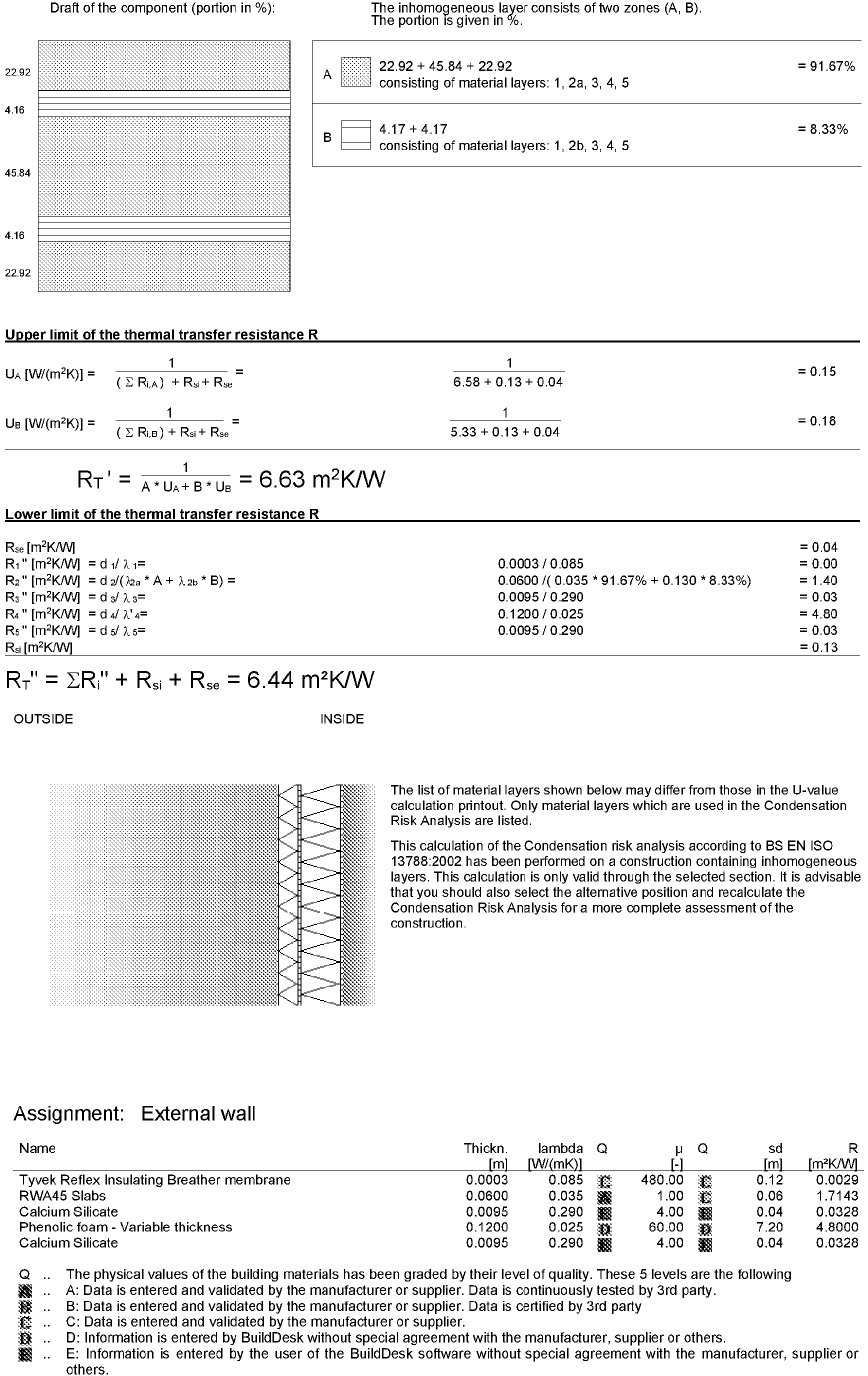

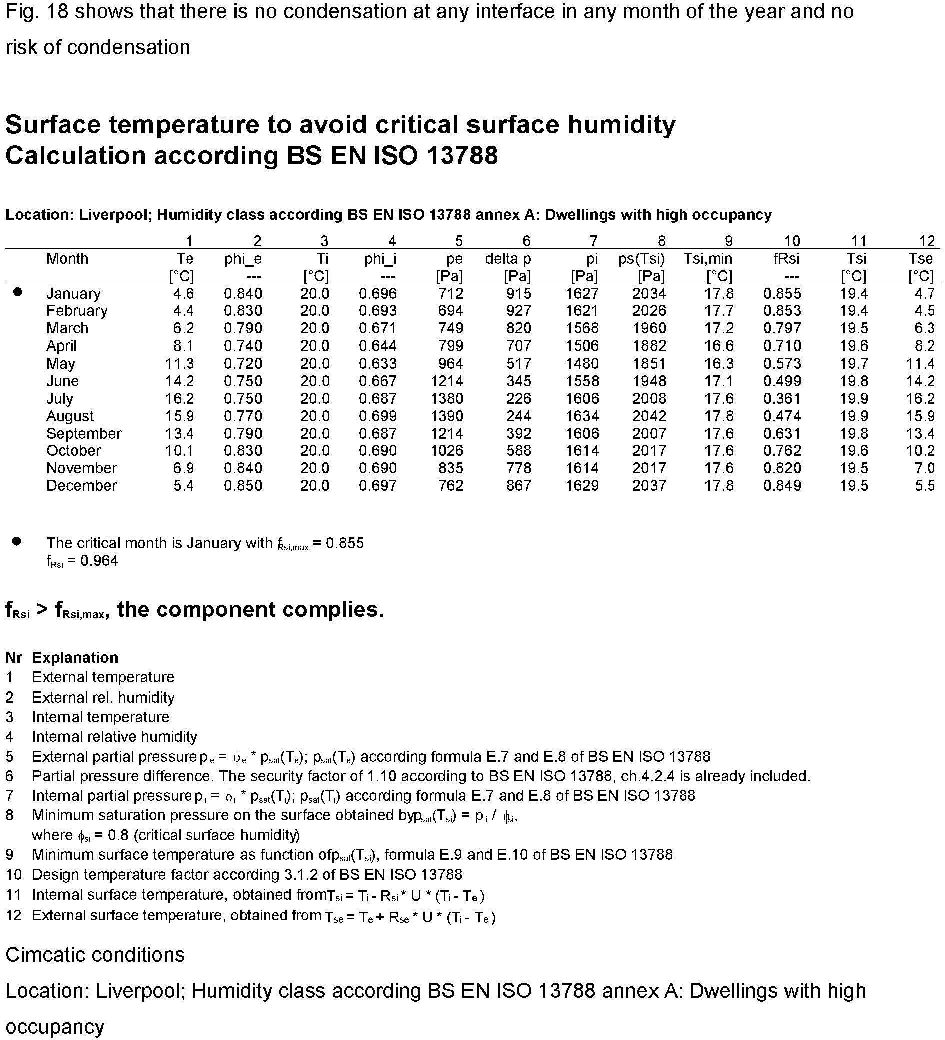

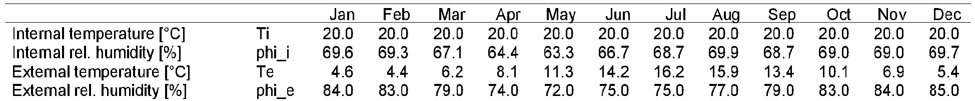

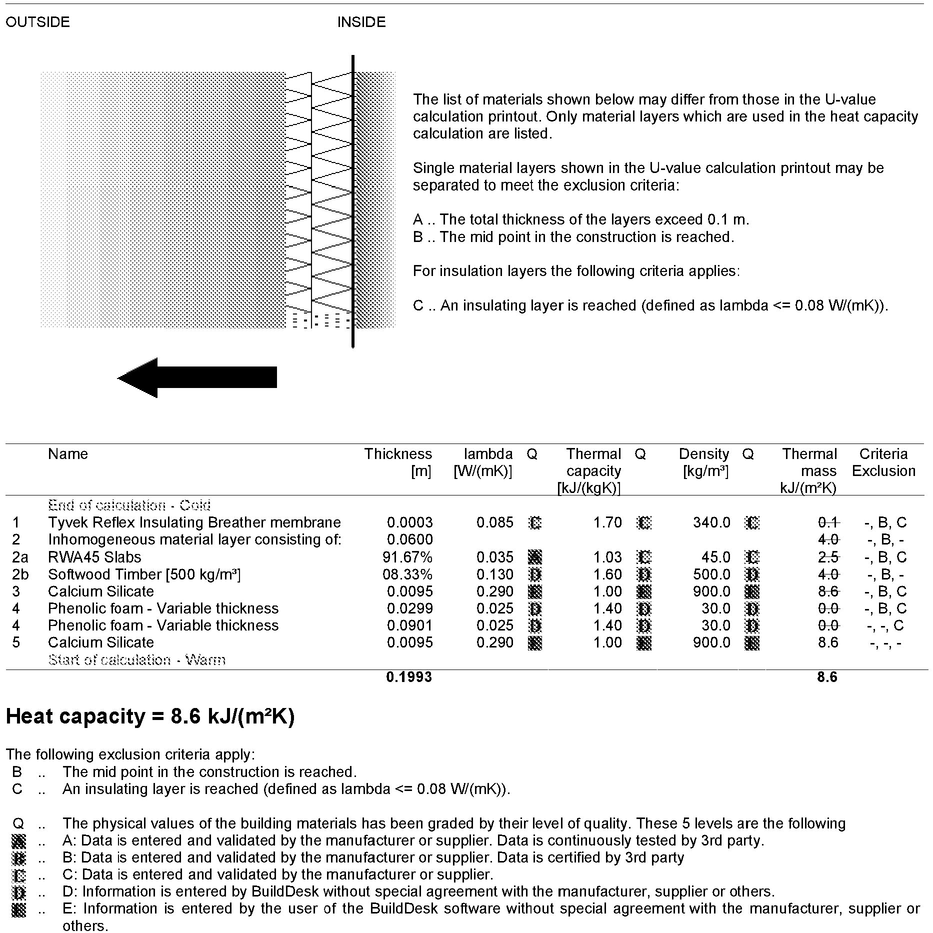

### Example 6

Thermal transmittance measurements were made in the NPL Rotatable wall Guarded Hot Box, described in NPL Report CBTLM 25. Where relevant, the equipment and measurement procedures are in accordance with the requirements of BS EN ISO 8990. The main features of the equipment are:
- the interior dimensions of the hot box are 2.4m × 2.4m
- all surfaces seen by the test element are matt black
- there are 25 air temperature sensors, 75mm from the holder panel face, positioned at the centres of squares of equal areas in front of the test element in both the hot and cold boxes
- the net heat flow direction is horizontal

### Measurement procedures

The measurement procedure used was essentially an air-to-air method. Thermocouples were also mounted on the hot and cold surfaces of the specimen to facilitate calculation of the environmental temperatures, as specified in BS EN ISO 8990.

The 2m × 2m × 0.149m thick, Insulated Engineered Panel, was mounted in a 298 mm thick expanded polystyrene (EPS) surround panel. The heat flow through this surround panel was calculated from its thermal conductivity and the surface temperature difference across it. The thermal conductivity of the EPS material was measured in the NPL guarded hot plate facility.

The measurements were carried out with the test element installed vertically - that is with horizontal heat flow.

The small heat flow around the test element boundaries was calculated using the 2D FEA software tool THERM5 produced by the Lawrence Berkeley National Laboratory, USA. Thermal transmittance values quoted are the mean of five sets of readings taken at two-hourly intervals. Equilibrium is assumed when the maximum difference between the five thermal transmittance values is less than approximately 1.0%.

The standardised thermal transmittance value for R140 is given in Table 2, and a summary of the main experimental parameters is given in Table 3.

**Table 5: Standardised Thermal Transmittance (U)**

| | Environmental temperature mean °C | Standardised thermal transmittance * W/(m²K) | |
|---|---|---|---|
| SIP in accordance with the present invention | 11.86 | 0.44 | |

| | | | |
|---|---|---|---|
| * Note: this U-value has been normalised to include the standard value of the total surface resistance of 0.17(m²K)/W | | | |

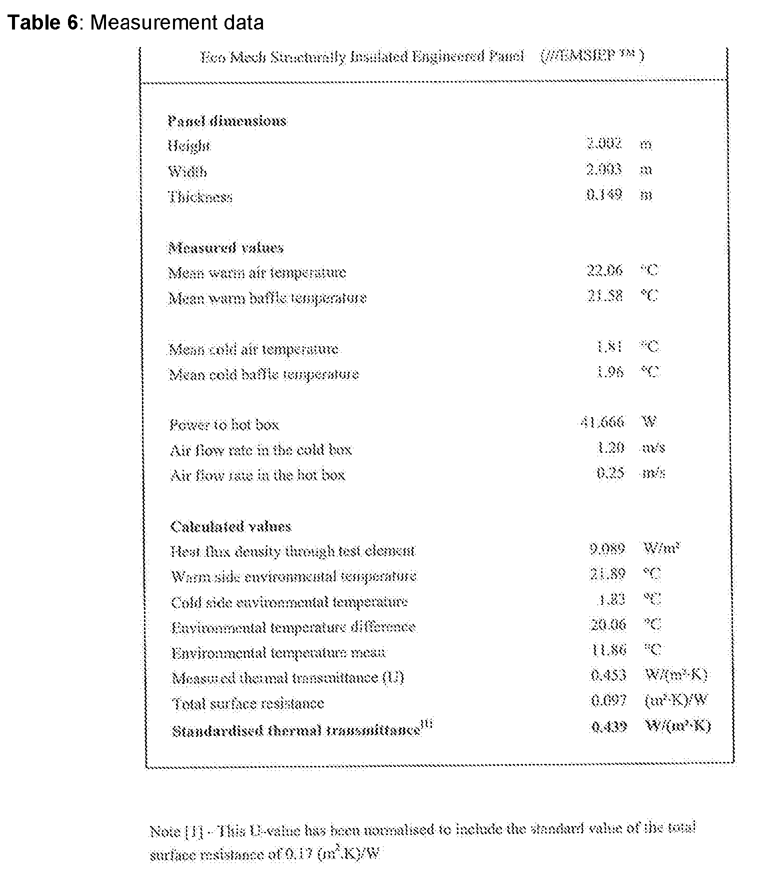

Offsite construction panels and systems, need to function on a number of levels (structural, thermal, moisture resistance, airtightness and whilst performing at their design optimum, undertake their core function of providing shelter).

Generally, increasing the structural performance will require additional internal structure within the panel, which decreases the thermal capacity of the panel and often results in an increase in thermal bridging.

An embodiment of the present invention has an integrated internal steel frame which increases the structural capacity of the system and provides its core airtightness. To negate thermal bridging issues of the steel frame, the frame may have a minimum thickness of high performance insulation bonded to both the external and internal faces of the steel frame, keeping it insulated against both heat and cold and therefore, negating thermal bridging across the wall panel.

The U Value of the panel can be adjusted for any climate or U Value requirement - with a minimum thickness of 180mm it provides a U Value of 0.18W/m2K (panel only) and can be designed and manufactured to provide a U Value below Passive House standards without the use of any additional 'add ons', tapes or mastic sealants simply by increasing the panel thickness - undertaken by varying the thickness of insulation within the panel without amending any other part of the panel or changing any other construction detail.

### Example 7

Double panels in accordance with the present invention were used consisting of two single SIEP wall panels. The single panel was of overall size 1200x2400 mm and comprised perimeter framing sections mitred and retained together with corner jointing brackets. The corner brackets were inserted into the perimeter profiles, through fixed, and spot welded. A 1.2 m×2.4 m by 9 mm thick magnesium silicate based board was fixed to each face of the single panel using 5.5 mm diameter × 65 mm long Hilti coated self-drilling wing tip screws. The board was fixed to the panel at nominally 300 mm centres to the perimeter framework. The fixings were placed 20 mm from the board edges. A panel core of polyurethane (PU) foam was injected into the cavity created by perimeter profiles and panel facing sheets and adhered to these components by its own adhesive properties whilst curing. Oriented strand board, Grade3 (OSB/3), 45mm wide × 11mm thick, were fitted into the perimeter frame profile, as perimeter infill, along the head and base of each single panel.

Each double panel assembly was connected together by means of an OSB/3 strip with nominal dimensions of 92mm wide × 11mm thick × 2400mm long, such that the strip was fitted into the perimeter frame profile, as a jointing spline, along the vertical edges of the adjoining panels. The splines were bedded on joint sealant.

### TEST PROGRAMME

- L: Wind loading to CWCT¹ standards on 2.4 × 2.4m panel
- L: Soft and hard body impact on the SIEP panel in accordance with BS 8200², as used in the wind load test above
- L: ETAG004³ accelerated weathering test (hygrothermal) on a 2.6m tall by 3.2m wide sample followed by wind loading and soft and hard body impact testing to BS8200

### Uniformly Distributed Wind Loading

The full size panel was placed in a rigid steel frame such that it was simply supported on four sides. An air bag was positioned on the face of the panel and a reaction board was placed over this butting up-to and tied to the external steel test rig frame.

A series of linear displacement transducers were located on an independent scaffold frame reading onto the rear of the panel.

A load was applied to the panel via the air bags to 1.68kPa. This was released and the system was allowed to recover. This was repeated twice before increasing the load to 2kPa then 3kPa. On releasing the load the samples were examined for any signs of damage before taking the panel to 15kpa releasing the load and examining for any damage.

### Soft and Hard Body Impact

This test was conducted on test panels which had already been subjected to Wind Load and ETAG004 Accelerated Weathering, therefore the sample preparation is as detailed above.

For the soft body impact tests a canvas bag containing 50Kg of lead shot was suspended from a 3m rope and allowed to swing at the face of the panel at an angle to give a maximum impact energy of 500Nm.

Each panel was impacted at the position considered to be the weakest position i.e. at the centre of the panel. Any damage was noted.

For the hard body impact test each wall was laid down on the laboratory strong floor and a steel ball of 1Kg mass and 62.5mm diameter was released onto the face of the wall panel from a height of 1m above the face of the panel providing an impact energy of 10 N-m. Any damage was noted.

### ETAG004 Accelerated Weathering

The 2.4m wide by 2.4m high wall was fixed into a rigid steel frame which was fixed into the hygrothermal test chamber such that the face of the panel was exposed to the cyclic test conditions as follows:

### Heat Rain - 80 cycles

Heating to 70°C rising over 1 hour and maintaining at 70°C ±5 at 10-15% RH for a further 2 hrs.

Followed by spraying with water (water temp ±15°C) at 1l/m2/min for 1 hour.

Draining for 2 hours.

On completion of the heat rain cycles the wall was conditioned for 48 hours at a temperature between 10 and 25°C with a minimum RH of 50%.

### Heat Cold - 5 cycles

Exposure to 50°C±5 with a rise of 1 hour and maximum 10%RH for 7 hours.

Exposure to -20°C±5 with a fall over 2 hours and hold for 14 hours.

The test panel was inspected every 4 heat rain cycles and daily under the heat cold cycles to observe changes in the visual characteristics of the panel.

On completion of the accelerated weathering test the panel was subjected to a wind loading test and soft and hard body impact testing as detailed in section 4.1 and 4.2 above.

### Results

### Uniformly Distributed Wind Loading

The maximum uniformly distributed wind load applied to the system was 17kPa with no failure of the panel and no visible damage to the face of the panel. The test was stopped due to the limit of the test rig being reached.

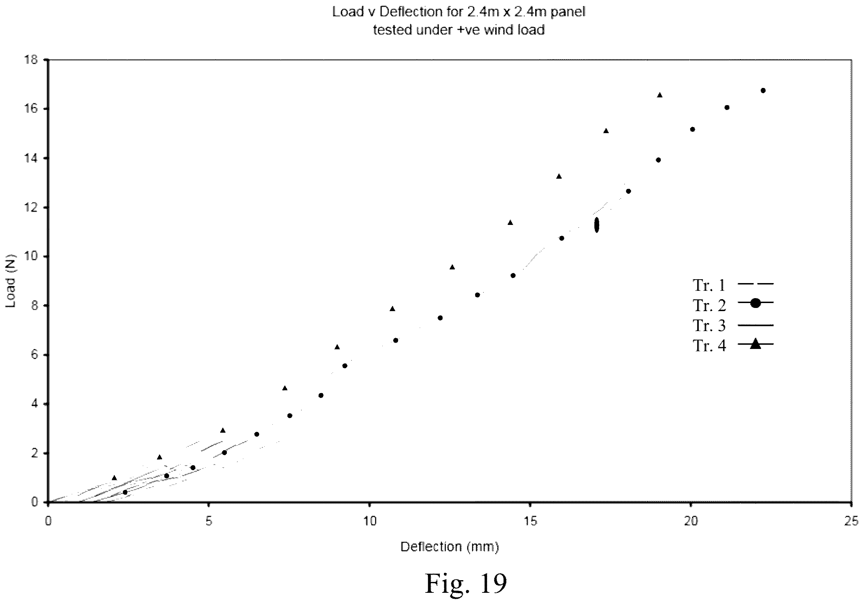

A load deflection graph is given in Fig. 19.

### Soft and Hard Body Impact

The soft body impactor caused no damage to the system at an impact energy of 500Nm.

The hard body impactor caused no damage to the system under an impact energy of 10Nm.

### ETAG004 Accelerated Weathering

The test panel showed no signs of deterioration under the accelerated weathering programme. There was no warping, blistering or cracking of the face of the panel After the accelerated weathering two bays of the panel were subjected to a negative wind load test and to a soft body impact test.

The panel achieved a maximum 15kpa negative wind load with no failure of the panel and no visible damage to the face of the panel. The test was stopped due to the limit of the test rig being reached.

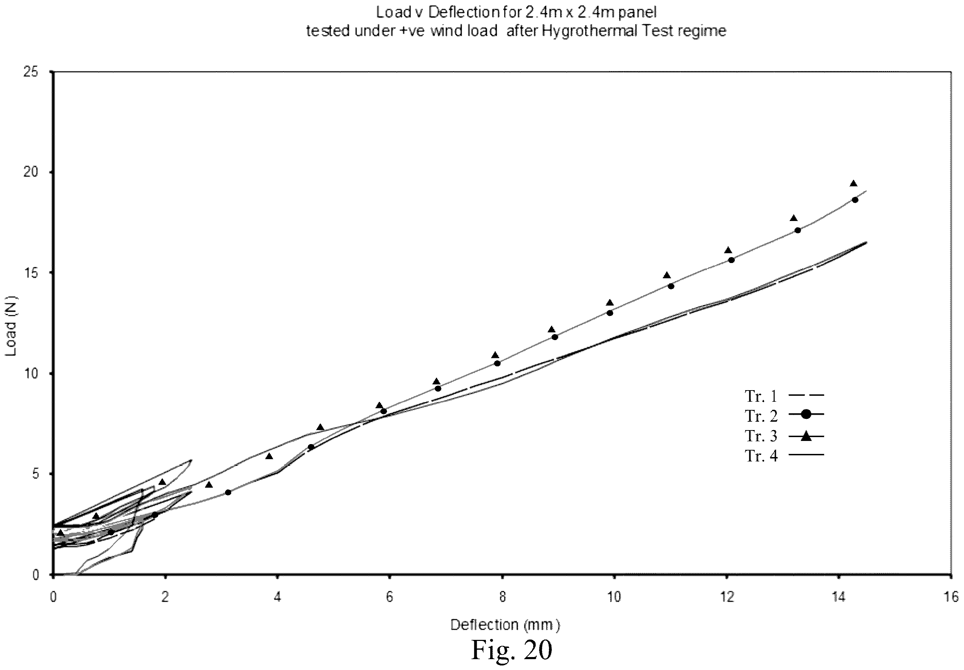

A load deflection graph is given in Fig. 20.

The panel showed no signs of damage under the soft body impact of 500N-m or the hard body impact energy of 10N-m.

### DISCUSSION

### Uniformly Distributed Wind Loading

Under wind loading the performance as determined by the testing was related to the banded wind loads. Hence in the first instance a design loading of 2kPa was applied and the deflection of the SIEP was not allowed to exceed span/200 or 12mm deflection whichever was the lesser.

At 2kPa the maximum recorded deflection on the system was 6.6mm and the residual deflection was 0.9mm. The maximum recorded deflection on the system tested after being subjected to the accelerated weathering test regime was 4.6mm and the residual deflection was 1.6mm.

Consequently under the design load and on unloading, the deflections were less than the limits set in the Standard¹.
The standard wall was taken to 17kPa before releasing the load and the wall subject to the accelerated weathering test regime was taken to 15kPa. The panels were not taken to failure.

### Soft and Hard Body Impact

The impact tests were carried out to BS8200 which categorises zones that the system may be used in depending on the performance under both soft body and hard body impact testing.

The soft body impact caused no damage to the panel at an impact energy of 500Nm. The hard body impact caused no reportable damage to the face of the panel at an impact energy of 10 N-m.

As defined in Tables 2-4 in BS 8200, the system in an as received condition and after being subject to the accelerated test regime can be classed as Category B which is "readily accessible to public and others with little incentive to exercise care; chance of accidents occurring and of misuse". It can be used in zones below 1.5m and can be used in pedestrian thoroughfares.

There are no test impact values given for Category A walls. In each case the type and severity of vandalism needs to be carefully assessed and appropriate impact values determined.

The panels in accordance with an embodiment of the present invention are able to withstand the wind loads as given in the CWCT standards with a good safety factor against failure in an as received condition and when subjected to an accelerated weathering test regime.

Under soft and hard body impact performance the panel is able to be used at below 1.5m in areas readily accessible to the public.

The system showed no deterioration after simulated long term weathering incorporating hygrothermal and heat cold conditions and although there is no direct correlation given in the standards for equating the number of cycles of heat/rain and heat/cold conditions that the sample has gone through to an expected life it is reasonable to say that the full cycle would indicate that a product would typically be expected to have a lifecycle of between 25 and 60 years depending on the installation standard and the exposure conditions the panel would be subjected to over that lifetime.

### REFERENCES

1 Centre for Windows and Cladding:
   a) Standard for Walls with ventilated rainscreens
   b) Standard for Testing of ventilated rainscreens (draft for development)
   c) Test Methods for ventilated rainscreens (draft for development)
   d) Guide to Good Practice for Facades
2 European Organisation of Technical Approvals Guideline for European Technical Approval of Kits for External Wall Cladding ETAG034, February 2008
3 British Standards Institution
   Code of Practice for the Design of Non-Loadbearing External Vertical Enclosures for Building BS 8200:1985
4 European Organisation of Technical Approvals Guideline for European Technical Approval of External Thermal Insulation Composite Systems with Rendering ETAG004, 2000.

### Example 8

A panel in accordance with the present invention had overall dimensions of 2408mm high by 2944 mm wide by 146 mm thick. The specimen was clad on each face with a layer of 9 mm thick magnesium silicate based board and comprised a profiled galvanized mild steel frame to G275 grade which sandwiched a 130 mm thick polyurethane core insulation referenced 'H1246-1 MD192140'.

The test was conducted in accordance with Clause 8 of BS 476: Part 21:1987 'Methods for determination of the fire resistance of loadbearing elements of construction'.
The panel was judged on its ability to comply with the performance criteria for loadbearing capacity, integrity and insulation. The panel was mounted within a steel support frame such that both vertical edges had freedom of movement.

The perimeter frame was profiled galvanised mild steel to G275 grade, 1 mm thick; Cornoer jointing brackets were also profiled galvanised mild steel to G275 grade, 1 mm thick, fixed by spot welding; the panel core was a polyurethane foam (Elastogram), 45 kg/m³, 130mm thick and injected into a cavity formed by the frame and the panel facing sheets; panel facings were magnesium silicate based board, 1050 kg/m³, 9mm thick and screwed to the perimeter frame; joint sealant was a silicone sealant for jointing splines and perimeter frame profile where panels abut one another; jointing splines were orientated strand board, OSB, grade 2, 92mm wide × 11 mm thick × 1220 mm long.

The furnace used was controlled so that its mean temperature complied with the requirements of BS 476: Part 20: 1987, clause 3.1.using six mineral insulated thermocouples distributed over a plane 100 mm from the surface of the test construction.

Thermocouples were provided to monitor the unexposed surface of the specimen and the output of all instrumentation was recorded at no less then 1 minute intervals.

A roving thermocouple was available to measure temperatures on the unexposed surface of the specimens at any position that might appear to be hotter than the temperatures indicated by the fixed thermocouples.

Cotton pads and gap gauges were available to evaluate the integrity of the panel. After the first 5 minutes of testing and for the remainder of the test, the furnace atmospheric pressure was controlled so that it complied with the requirements of BS 476: Part 20: 1987, clause 3.2.2. The calculated differential relative to the laboratory atmosphere at the top of the specimen was 18 (+/- 2) Pa.

### Test observations

All observations are from the unexoosed face unless noted otherwise.

The ambient air temperature in the vicinity of the test construction was 12oC at the start of the test with a maximum variation of +1oC durinq the test.

### Time (mins)

00' 00" The test commences.
04' 30" Sight smoke release is evident at the head of the specimen.
20' 00" The smoke release increases in volume from the head of the assemblv.
28' 00" Steam issues from the base of each verticaljoint, which emit droplets of moisture,
30' 00" The specimen continues to satisfy the loadbearing, insulation and integrity criteria of the test.
42' 00" Slight smoke release is evident coincident with thermocouple No.10 along the right side vertical ioint.
50' 00" Slight smoke release is evident from the left side vertical joint coincident with thermocouple No.9.
52' 40" The maximum temperature rise is exceeded by thermocouple No.3. Insulation failure is deemed to occur
60' 00" The specimen continues to satisfy the loadbearing and integrity criteria of the test.
70' 00" The specimen continues to satisfy the loadbearing and integrity criteria of the test.

**Table 7: Mean surface temperature with the temperature/time relationship specified in the**

| **Standard** | | |
|---|---|---|
| Time | Specified | Actual |
| | Furnace | Furnace |
| Minutes | Temperature | Temperature |
| | Deg. C | Deg. C |
| 0 | 20 | 17 |
| 3 | 502 | 565 |
| 6 | 603 | 637 |
| 9 | 663 | 691 |
| 12 | 706 | 735 |
| 15 | 739 | 765 |
| 18 | 766 | 782 |
| 21 | 789 | 809 |
| 24 | 809 | 801 |
| 27 | 826 | 817 |
| 30 | 842 | 854 |
| 33 | 856 | 865 |
| 36 | 869 | 882 |
| 39 | 881 | 891 |
| 42 | 892 | 900 |
| 45 | 902 | 908 |
| 48 | 912 | 916 |
| 51 | 921 | 919 |
| 54 | 930 | 932 |
| 57 | 938 | 931 |
| 60 | 945 | 942 |
| 63 | 953 | 957 |
| 66 | 960 | 957 |
| 69 | 966 | 968 |
| 70 | 968 | 972 |

**Table 8**

| **Individual and Mean Temperatures Recorded on the Unexposed Surface** of **The Panel** | | | | | | |
|---|---|---|---|---|---|---|
| Time | T/C Number | T/C Number | T/C Number | T/C Number | T/C Number | Mean |
| Minutes | 2 | 3 | 4 | 5 | 6 | Temp |
| | Deg. C | Deg. C | Deg. C | Deg. C | Deg. C | Dea. C |
| 0 | 12 | 12 | 12 | 13 | 13 | 12 |
| 3 | 12 | 12 | 12 | 13 | 13 | 12 |
| 6 | 12 | 12 | 12 | 13 | 13 | 12 |
| 9 | 12 | 12 | 12 | 13 | 13 | 12 |
| 12 | 12 | 12 | 12 | 13 | 13 | 12 |
| 15 | 12 | 12 | 12 | 13 | 13 | 12 |
| 18 | 12 | 12 | 12 | 13 | 13 | 12 |
| 21 | 12 | 12 | 12 | 13 | 13 | 12 |
| 24 | 12 | 12 | 12 | 13 | 13 | 12 |
| 27 | 12 | 12 | 12 | 13 | 13 | 12 |
| 30 | 12 | 12 | 13 | 13 | 13 | 13 |
| 33 | 12 | 17 | 13 | 13 | 13 | 14 |
| 36 | 12 | 89 | 31 | 13 | 21 | 33 |
| 39 | 48 | 100 | 84 | 27 | 69 | 66 |
| 42 | 100 | 105 | 101 | 74 | 100 | 96 |
| 45 | 103 | 120 | 104 | 101 | 103 | 106 |
| 48 | 111 | 145 | 109 | 105 | 107 | 115 |
| 51 | 129 | 169 | 124 | 112 | 120 | 131 |
| 54 | 150 | 210 | 139 | 135 | 141 | 155 |
| 57 | 171 | 243 | 154 | 161 | 159 | 178 |
| 60 | 209 | 270 | 178 | 203 | 191 | 210 |
| 63 | 240 | 285 | 207 | 238 | 230 | 240 |
| 66 | 264 | 295 | 231 | 266 | 264 | 264 |
| 69 | 279 | 302 | 255 | 283 | 283 | 280 |
| 70 | 282 | 305 | 262 | 287 | 287 | 285 |

**Table 9**

| **Individual Temperature Recorded At Various Positions On The Unexposed Surface of The Panel** | | | | | |
|---|---|---|---|---|---|
| Time | T/C | T/C | T/C | T/C | T/C |
| | Number | Number | Number | Number | Number |
| Minutes | 7 | 8 | 9 | 10 | 11 |
| | Deg. C | Deg. C | Deg. C | Deg. C | Deg. C |
| 0 | 14 | 15 | 16 | 16 | 15 |
| 3 | 14 | 15 | 16 | 16 | 15 |
| 6 | 14 | 15 | 16 | 16 | 15 |
| 9 | 14 | 15 | 16 | 16 | 19 |
| 12 | 15 | 15 | 16 | 16 | 28 |
| 15 | 15 | 16 | 16 | 16 | 35 |
| 18 | 16 | 16 | 17 | 17 | 39 |
| 21 | 17 | 16 | 17 | 18 | 42 |
| 24 | 19 | 17 | 19 | 20 | 45 |
| 27 | 27 | 17 | 21 | 24 | 47 |
| 30 | 33 | 18 | 24 | 28 | 50 |
| 33 | 37 | 20 | 27 | 33 | 54 |
| 36 | 39 | 28 | 31 | 38 | 58 |
| 39 | 41 | 40 | 37 | 46 | 67 |
| 42 | 45 | 49 | 46 | 57 | 77 |
| 45 | 50 | 61 | 59 | 67 | 86 |
| 48 | 57 | 75 | 71 | 76 | 91 |
| 51 | 69 | 85 | 82 | 88 | 96 |
| 54 | 76 | 95 | 91 | 96 | 99 |
| 57 | 80 | 100 | 98 | 101 | 102 |
| 60 | 82 | 101 | 101 | 106 | 105 |
| 63 | 86 | 103 | 103 | 110 | 107 |
| 66 | 93 | 109 | 111 | 115 | 111 |
| 69 | 99 | 118 | 118 | 120 | 121 |
| 70 | 101 | 121 | 119 | 123 | 126 |

**Table 10**

| **Recorded Deflection of Specimen During the Test** | | | | | | |
|---|---|---|---|---|---|---|
| Time | Deflection | Deflection | Deflection | Deflection | Deflection | Deflection |
| | Number | Rate | Number | Rate | Number | Rate |
| Minutes | 1 | 1 | 2 | 2 | 3 | 3 |
| | mm | mm | mm | mm | mm | mm |
| 0 | 0 | 0 | 0 | 0 | 0 | 0 |
| 3 | 0 | 0 | 3 | 0 | 4 | 0 |
| 6 | 1 | 0 | 3 | 0 | 5 | 0 |
| 9 | 1 | 0 | 4 | 0 | 5 | 0 |
| 12 | 2 | 0 | 6 | 1 | 5 | 0 |
| 15 | 4 | 1 | 9 | 1 | 12 | 4 |
| 18 | 6 | 1 | 13 | 1 | 18 | 2 |
| 21 | 7 | 0 | 16 | 1 | 22 | 2 |
| 24 | 7 | 0 | 18 | 1 | 26 | 1 |
| 27 | 9 | 1 | 21 | 1 | 27 | 0 |
| 30 | 12 | 1 | 27 | 2 | 25 | 1 |
| 33 | 15 | 1 | 35 | 3 | 21 | 1 |
| 36 | 18 | 1 | 40 | 0 | 20 | 0 |
| 39 | 17 | 0 | 40 | 0 | 20 | 0 |
| 42 | 16 | 0 | 40 | 0 | 20 | 0 |
| 45 | 16 | 0 | 40 | 0 | 20 | 0 |
| 48 | 17 | 0 | 40 | 0 | 20 | 0 |
| 51 | 20 | 1 | 41 | 0 | 20 | 1 |
| 54 | 23 | 1 | 41 | 0 | 19 | 0 |
| 57 | 24 | 0 | 41 | 0 | 19 | 0 |
| 60 | 24 | 0 | 40 | 1 | 19 | 0 |
| 63 | 22 | -1 | 40 | 0 | 19 | 0 |
| 66 | 20 | -1 | 40 | 0 | 19 | 0 |
| 69 | 19 | 0 | 40 | 0 | 19 | 0 |
| 70 | 19 | 0 | 40 | 0 | 19 | 0 |

### Positive readings indicate movement towards the heating conditions

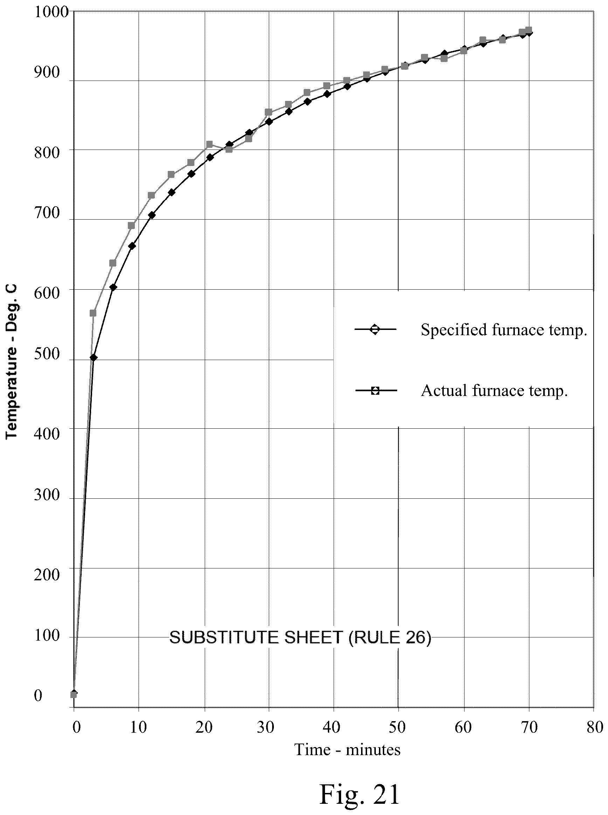

Fig. 21 shows the mean surface temperature, together with the temperature/time relationship specified in the standard.

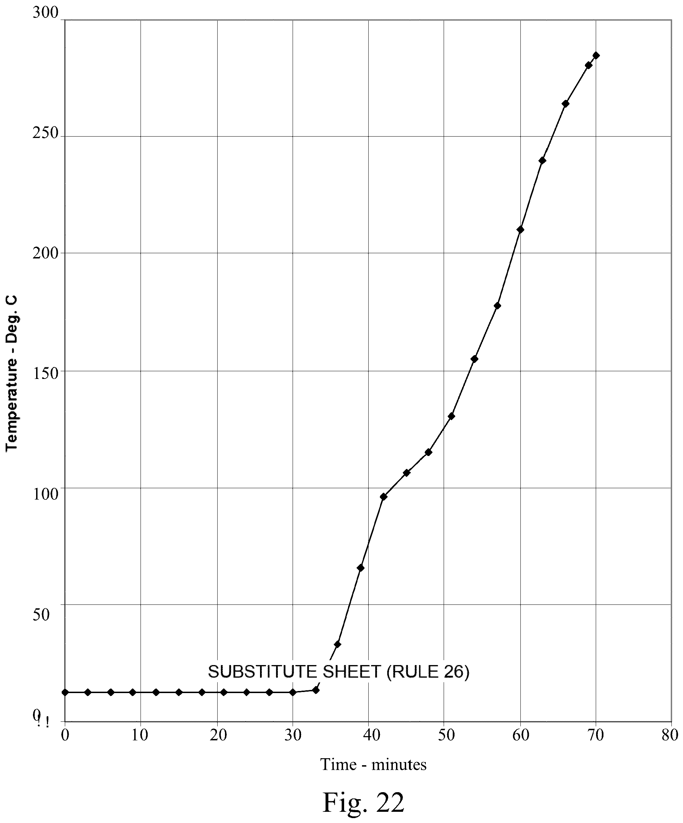

Fig. 22 shows the mean temperatures recorded on the unexposed surface of the panel.

The loadbearing capacity of the panel was satisfied for 70 minutes. Regarding integrity, there was no collapse of the panel, no sustained flaming on the unexposed surface and no loss of impermeability. These requirements were satisfied for 70 minutes.

Regarding insulation, the standard requires that the mean temperature rise of the unexposed surface shall not be greater than 140°C and that the maximum temperature rise shall not be greater than 180°C. These requriements were satisfied for a period of 52 minutes after which time a temperature rise in excess of 180°C was recorded on one thermocouple.

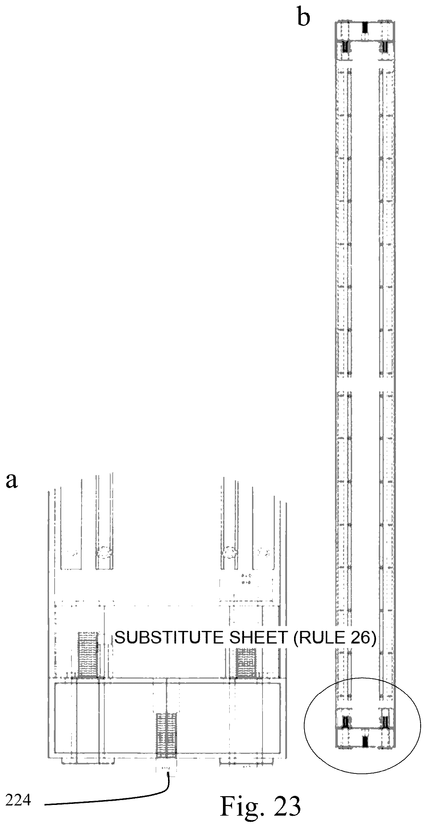

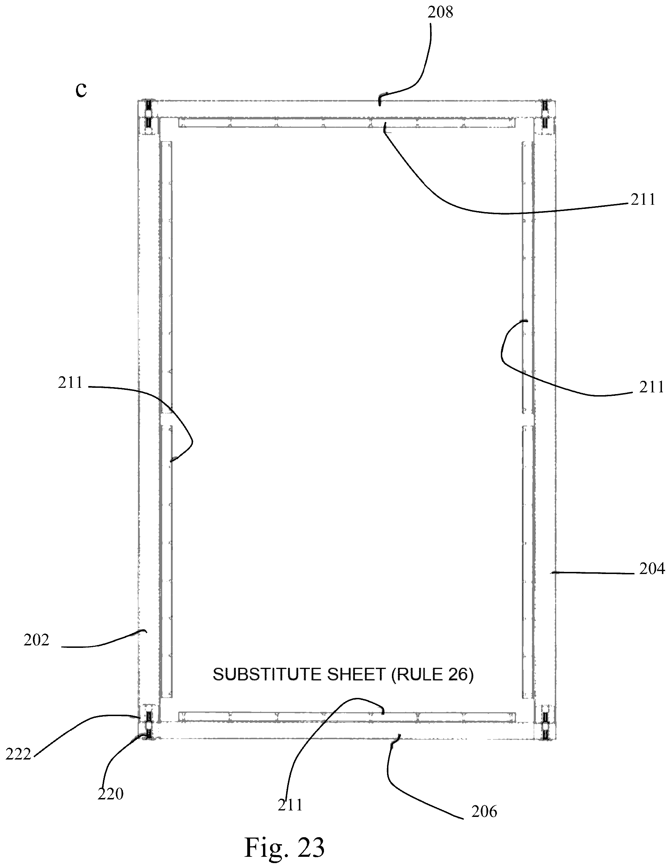

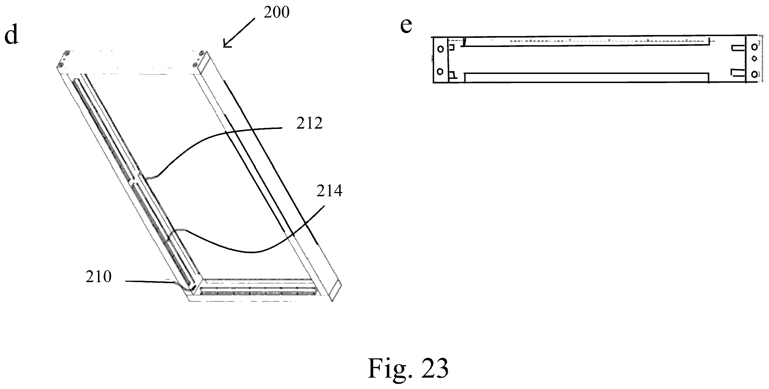

Referring to Figs. 23a - e, there is illustrated a jig 200 having a frame comprising four frame members, two side frame members 202, 204, and bottom and top frame members 206 and 208 forming a rectangular frame. Extending inwardly, perpendicularly to the plane of the longitudinal axis of each frame member from the interior face 210 of the frame are two upstanding ridges having rectangular cross section. The ridges have a break halfway along their length on the longer, side frame members 202, 204. The ridges 211 help form the channels in the finished panel assembly.

At the corners of the rectangular frame are releasable securing means in the form of two screws 220 and complementarily shaped threaded bores 222 to enable the frame members to be secured to one another.

Also provided is an inlet 224 extending from the outer face of the frame to it's inner face which allows the passage of fluid during the manufacture of a panel and which can be selectively sealed. During manufacture containment boards can be positioned in place framed by the frame members and forming a space between containment boards. Expanding foam can then be injected through the inlet to the interior which is formed between the containment boards and the frame of the jig. The inlet can be sealed and the foam allowed to set. Once set the jig can be disassembled and the panel assembly is formed.

## Claims

1. A building panel assembly (10) comprising a rigid frame (14) and a pair of spaced-apart containment boards (12', 12"), separated by an inner insulating core (13), said inner insulating core having at least one peripherally disposed channel for receiving said rigid frame (14), said channel spaced apart from and disposed between the containment boards, the rigid frame (14) being covered by insulating core material and insulated from the containment boards by the inner insulating core to eliminate thermal bridging, wherein the rigid frame (14) defines a pair of spaced-apart longitudinal channels (32', 32") which extend around the periphery of the panel and extend into the space between the spaced-apart pair of containment boards (12', 12").

2. An assembly (10) as claimed in claim 1 wherein the frame (14) is integrally formed with the insulating core (13) which extends over the frame.

3. An assembly (10) as claimed in claim 1 or 2 wherein two or more panels (10) can be connected by means of a mating member (40', 40").

4. An assembly (10) as claimed in claim 3 wherein the mating member (40', 40") has 'I' or 'H' cross section and is received by the one or more channels in the insulating core or rigid frame.

5. An assembly (10) as claimed in claim 3 or 4 wherein, the mating members (40', 40") are universal columns.

6. An assembly (10) as claimed in claim 5, having additional support comprises I-section and/or H-section UC supports.

7. An assembly (10) as claimed in any one of the previous claims comprising at least one conduit (15) disposed adjacent to and between the containment board and the inner insulating core.

8. An assembly (10) as claimed in claim 7 having two conduits (15).

9. An assembly (10) as claimed in claim 8 wherein each conduit (15) is spaced apart from one another and disposed opposite one another and adjacent to its respective containment board (12', 12").

10. An assembly (10) as claimed in any one of the previous claims further comprising an alignment track (50) upon which panels (10) may be disposed.

11. An assembly (10) as claimed in any preceding claim, in which the containment boards (12', 12") are selected from oriented strand board, cement particle board magnesium oxide wall board, plywood, pressure treated plywood, steel, aluminium, fibre reinforced plastics, or metal, or composite sheeting.

12. An assembly (10) as claimed in any preceding claim, in which the inner insulating core (13) is comprised of expanded polystyrene foam, extruded polystyrene foam or polyurethane foam.

13. An assembly (10) as claimed in any preceding claim, further including a sole plate (50), which is securable to a foundation or floor, and having upstanding alignment rails (54) correspondingly spaced for insertion into the spaced-apart longitudinal channels on the bottom edge of a building panel assembly, in use.

14. An assembly (10) as claimed in any preceding claim, in which a second panel (12") is connectable to, and alignable with, a first panel (12'), by means of a pair of alignment tracks (50), which engage in the respective spaced-apart longitudinal channels of the respective adjacent panels, in use.

15. An assembly (10) as claimed in any preceding claim, in which a vertical rigid frame member (14) is provided having correspondingly spaced alignment tracks for engagement in respective spaced-apart longitudinal channels on the edge of an adjacent panel (10).

16. A method of manufacturing a building panel assembly (10) as claimed in any one of the preceding claims comprising the use of a jig (200) having a frame comprising a plurality of frame members (202, 204, 206, 208), having at least one ridge extending substantially around the inner surface of the frame and means for releasably securing the frame members together to form the frame (200), such that once a panel (10) has been formed, the frame members can be released and the panel (10) removed from the jig (200).

17. A method as claimed in claim 16 wherein the frame (200) has two ridges (211) extending substantially around the inner surface of the frame.

18. A method as claimed in claim 16 or 17 wherein the frame (200) has an inlet to allow the passage of inner insulating core material therethrough.

## Patentansprüche

1. Baupaneelanordnung (10), umfassend einen starren Rahmen (14) und ein Paar von beabstandeten Einschlussplatten (12', 12"), die durch einen inneren Isolierkern (13) getrennt sind, wobei der innere Isolierkern mindestens einen peripher eingerichteten Kanal zum Empfangen des starren Rahmens (14) aufweist, wobei der Kanal von den Einschlussplatten beabstandet und zwischen diesen eingerichtet ist, wobei der starre Rahmen (14) durch ein Isolierkernmaterial bedeckt und durch den inneren Isolierkern von den Einschlussplatten isoliert ist, um Wärmebrücken zu eliminieren, wobei der starre Rahmen (14) ein Paar von beabstandeten Längskanälen (32', 32") definiert, die sich um die Peripherie des Paneels herum erstrecken und sich in den Raum zwischen dem beabstandeten Paar von Einschlussplatten (12', 12") erstrecken.

2. Anordnung (10) nach Anspruch 1, wobei der Rahmen (14) mit dem Isolierkern (13) einstückig ausgebildet ist, der sich über den Rahmen erstreckt.

3. Anordnung (10) nach Anspruch 1 oder 2, wobei zwei oder mehr Paneele (10) mittels eines Passelements (40', 40") verbunden werden können.

4. Anordnung (10) nach Anspruch 3, wobei das Passelement (40', 40") einen "I"- oder "H"-Querschnitt aufweist und durch den einen oder die mehreren Kanäle in dem Isolierkern oder starren Rahmen empfangen wird.

5. Anordnung (10) nach Anspruch 3 oder 4, wobei die Passelemente (40', 40") universelle Säulen sind.

6. Anordnung (10) nach Anspruch 5, die eine zusätzliche Stütze aufweist, die UC-Stützen mit einem I-Bereich und/oder H-Bereich umfasst.

7. Anordnung (10) nach einem der vorstehenden Ansprüche, umfassend mindestens eine Leitung (15), die angrenzend an und zwischen der Einschlussplatte und dem inneren Isolierkern eingerichtet ist.

8. Anordnung (10) nach Anspruch 7, die zwei Leitungen (15) aufweist.

9. Anordnung (10) nach Anspruch 8, wobei jede Leitung (15) voneinander beabstandet und einander gegenüberliegend und angrenzend an ihre jeweilige Einschlussplatte (12', 12") eingerichtet ist.

10. Anordnung (10) nach einem der vorstehenden Ansprüche, ferner umfassend eine Ausrichtungsschiene (50), auf der Paneele (10) eingerichtet werden können.

11. Anordnung (10) nach einem der vorstehenden Ansprüche, in der die Einschlussplatten (12', 12") aus Grobspanplatten, Zementspanplatten, Magnesiumoxid-Wandplatten, Sperrholz, druckbehandeltem Sperrholz, Stahl, Aluminium, faserverstärktem Kunststoff, oder Metall oder Verbundfolie ausgewählt sind.

12. Anordnung (10) nach einem der vorstehenden Ansprüche, in dem der innere Isolierkern (13) aus expandiertem Polystyrolschaum, extrudiertem Polystyrolschaum oder Polyurethanschaum besteht.

13. Anordnung (10) nach einem der vorstehenden Ansprüche, ferner einschließlich eine Fußplatte (50), die an einem Fundament oder Boden befestigbar ist und hochstehende Ausrichtungsschienen (54) aufweist, die in Verwendung für ein Einsetzen in die beabstandeten Längskanäle auf die untere Kante einer Baupaneelanordnung entsprechend beabstandet sind.

14. Anordnung (10) nach einem der vorstehenden Ansprüche, in der ein zweites Paneel (12") mit einem ersten Paneel (12') mittels eines Paares von Ausrichtungsschienen (50) verbindbar und damit ausrichtbar ist, die in Verwendung in die jeweiligen beabstandeten Längskanäle der jeweiligen angrenzenden Paneele eingreifen.

15. Anordnung (10) nach einem der vorstehenden Ansprüche, in der ein vertikales starres Rahmenelement (14) bereitgestellt ist, das entsprechend beabstandete Ausrichtungsschienen für einen Eingriff in jeweilige beabstandete Längskanäle an der Kante eines angrenzenden Paneels (10) aufweist.

16. Verfahren zum Herstellen einer Baupaneelanordnung (10) nach einem der vorstehenden Ansprüche, umfassend die Verwendung einer Spannvorrichtung (200), die einen Rahmen aufweist, umfassend eine Vielzahl von Rahmenelementen (202, 204, 206, 208), die mindestens eine Rippe aufweist, die sich im Wesentlichen um die innere Oberfläche des Rahmens erstreckt, und Mittel zum lösbaren Befestigen der Rahmenelemente aneinander, um den Rahmen (200) derart auszubilden, dass, sobald ein Paneel (10) ausgebildet worden ist, die Rahmenelemente gelöst und die Paneele (10) von der Spannvorrichtung (200) entfernt werden können.

17. Verfahren nach Anspruch 16, wobei der Rahmen (200) zwei Rippen (211) aufweist, die sich im Wesentlichen um die innere Oberfläche des Rahmens herum erstrecken.

18. Verfahren nach Anspruch 16 oder 17, wobei der Rahmen (200) einen Einlass aufweist, um den Durchgang von einem inneren Isolierkernmaterial dahindurch zu ermöglichen.

## Revendications

1. Assemblage de panneaux de construction (10) comprenant un cadre rigide (14) et une paire de plaques de confinement espacées (12', 12"), séparées par une noyau isolant interne (13), ledit noyau isolant interne ayant au moins un canal disposé de manière périphérique permettant de recevoir ledit cadre rigide (14), ledit canal étant espacé des plaques de confinement et disposé entre celles-ci, le cadre rigide (14) étant recouvert d'un matériau noyau isolant et isolé des plaques de confinement par le noyau isolant interne pour éliminer les ponts thermiques, le cadre rigide (14) définissant une paire de canaux longitudinaux espacés (32', 32") qui s'étendent autour de la périphérie du panneau et s'étendent dans l'espace entre la paire de plaques de confinement espacées (12', 12").

2. Assemblage (10) selon la revendication 1, le cadre (14) étant formé d'un seul tenant avec le noyau isolant (13) qui s'étend sur le cadre.

3. Assemblage (10) selon la revendication 1 ou 2, au moins deux panneaux (10) pouvant être reliés au moyen d'un élément d'accouplement (40', 40").

4. Assemblage (10) selon la revendication 3, l'élément d'accouplement (40', 40") ayant une section transversale en « I » ou « H » et étant reçu par le ou les canaux dans le noyau isolant ou le cadre rigide.

5. Assemblage (10) selon la revendication 3 ou 4, les éléments d'accouplement (40', 40") étant des colonnes universelles.

6. Assemblage (10) selon la revendication 5, ayant un support supplémentaire comprenant des supports UC à section en I et/ou à section en H.

7. Assemblage (10) selon l'une quelconque des revendications précédentes comprenant au moins un conduit (15) disposé à proximité de la plaque de confinement et du noyau isolant interne et entre ceux-ci.

8. Assemblage (10) selon la revendication 7 ayant deux conduits (15).

9. Assemblage (10) selon la revendication 8, chaque conduit (15) étant espacé l'un de l'autre et disposé l'un en face de l'autre et à proximité de sa plaque de confinement respective (12', 12").

10. Assemblage (10) selon l'une quelconque des revendications précédentes, comprenant en outre une piste d'alignement (50) sur laquelle des panneaux (10) peuvent être disposés.

11. Assemblage (10) selon l'une quelconque des revendications précédentes, les plaques de confinement (12', 12") étant choisies parmi des plaques de copeaux orientés, des plaques de particules de ciment, des plaques murales en oxyde de magnésium, du contreplaqué, du contreplaqué traité sous pression, de l'acier, de l'aluminium, du plastique renforcé par des fibres ou du métal ou des tôles composites.

12. Assemblage (10) selon l'une quelconque des revendications précédentes, le noyau isolant interne (13) étant constitué de mousse de polystyrène expansé, de mousse de polystyrène extrudé ou de mousse de polyuréthane.

13. Assemblage (10) selon l'une quelconque des revendications précédentes, comportant en outre une semelle (50), qui peut être fixée à une fondation ou à un plancher, et ayant des glissières d'alignement verticales (54) espacées de manière correspondante pour être insérées dans les canaux longitudinaux espacés sur le bord inférieur d'un assemblage de panneaux de construction, lors de l'utilisation.

14. Assemblage (10) selon l'une quelconque des revendications précédentes, un second panneau (12") pouvant être relié à un premier panneau (12') et aligné sur celui-ci, au moyen d'une paire de pistes d'alignement (50), qui s'insèrent dans les canaux longitudinaux espacés respectifs des panneaux adjacents respectifs, lors de l'utilisation.

15. Assemblage (10) selon l'une quelconque des revendications précédentes, dans lequel un élément de cadre rigide vertical (14) est prévu ayant des pistes d'alignement espacées de manière correspondante pour s'insérer dans des canaux longitudinaux espacés respectifs sur le bord d'un panneau adjacent (10).

16. Procédé de fabrication d'un assemblage de panneaux de construction (10) selon l'une quelconque des revendications précédentes, comprenant l'utilisation d'un gabarit (200) ayant un cadre comprenant une pluralité d'éléments de cadre (202, 204, 206, 208), ayant au moins une nervure s'étendant sensiblement autour de la surface interne du cadre et un moyen pour fixer de manière amovible les éléments de cadre ensemble pour former le cadre (200), de telle sorte qu'une fois qu'un panneau (10) a été formé, les éléments de cadre peuvent être libérés et le panneau (10) retiré du gabarit (200).

17. Procédé selon la revendication 16, le cadre (200) comprenant deux nervures (211) s'étendant sensiblement autour de la surface interne du cadre.

18. Procédé selon la revendication 16 ou 17, le cadre (200) ayant une entrée pour permettre le passage du matériau noyau isolant interne à travers celui-ci.
